# EUROPÄISCHE PATENTSCHRIFT

(11) **EP 3 622 414 B1**
(45) Veröffentlichungstag und Bekanntmachung des Hinweises auf die Patenterteilung: **18.10.2023**
(21) Anmeldenummer: 18720595.0
(22) Anmeldetag: 26.04.2018
(51) Int. Cl.: G06F 16/27

(54) **DATENBANK MIT FELDBEZOGENEN ZEITSTEMPELN**
DATABASE WITH FIELD-RELATED TIMESTAMPS
BANQUE DE DONNÉES À ESTAMPILLES TEMPORELLES ASSOCIÉES AU CHAMP

(30) Priorität: 12.05.2017 DE 102017208084
(43) Veröffentlichungstag der Anmeldung: 18.03.2020
(73) Patentinhaber: Bundesdruckerei GmbH, 10969 Berlin (DE)
(72) Erfinder: KOMAROV, Ilya, 13507 Berlin (DE); PAESCHKE, Manfred, 16348 Wandlitz (DE)
(74) Vertreter: Richardt Patentanwälte PartG mbB
(86) Internationale Anmeldenummer: PCT/EP2018/060755
(87) Internationale Veröffentlichungsnummer: WO 2018/206304

(56) Entgegenhaltungen:
- US-A1- 2006 047 895
- US-A1- 2012 023 125
- US-A1- 2013 179 186

## Beschreibung

### Technisches Gebiet

Die vorliegenden Darstellungen betreffen IT-Systeme und insbesondere Datenbankmanagementsysteme.

### Stand der Technik

Aus dem Stand der Technik sind verschiedene Datenbankmanagementsysteme (DBMS) bekannt. Sie dienen der strukturierte Speicherung und schnellen Verarbeitung von darin gespeicherten Daten.

Viele DBMSs führen dabei Lese- und Schreiboperationen innerhalb sogenannter "Transaktionen" durch. Fehlerhafte Transaktionen werden abgebrochen und die bisherigen Änderungen in der Datenbank rückgängig gemacht, so dass sie keine Auswirkungen auf den Zustand der Datenbank haben. Transaktionen werden von Transaktionssystemen verarbeitet, die die Einhaltung diverser Anforderungen überprüfen und aus mehreren Transaktionen eine Historie erstellen. Diese wird oftmals verwendet, um die Datenbank in einen definierten, logisch konsistenten Zustand in der Vergangenheit zu versetzen. Dies kann z.B. sinnvoll sein, um die Datenbank etwa nach einem Stromausfall oder vergleichbaren Ereignis wieder "zurückzusetzen".

Diese transaktionalen DBMSs haben jedoch den Nachteil, dass die Überwachung der Einhaltung bestimmter Kriterien, insb. der ACID-Eigenschaften, für jede einzelne Transaktion sehr aufwändig ist. Es wird also die Last der Prozessoren erhöht bzw. die Geschwindigkeit der Ausführung von Datenbankoperationen reduziert. Insbesondere falls eine laufende Transaktion abgebrochen werden muss (Abort) kann dies mit einer erheblichen Erhöhung der Prozessorlast verbunden sein: Die transaktionale Bedingung der Atomarität fordert, dass sämtliche Auswirkungen der abgebrochenen Transaktion auf den Datenbestand rückgängig gemacht werden müssen. Das Rückgängigmachen der Effekte einer Transaktion wird als Rollback (Zurücksetzen) bezeichnet. Es kann dabei vorkommen, dass das Zurücksetzen einer Transaktion das Zurücksetzen einer anderen Transaktion notwendig macht, was zur Bildung regelrechter Ketten von Zurücksetzungen führen kann; dies wird als kaskadierendes Rücksetzen bezeichnet und kann sehr aufwändig sein.

Um das Rollback zu ermöglichen, werden also bei transaktionalen DBMSs umfangreiche Historien aller Datenbankoperationen erstellt. Dies machen sich einige Datenbank-Recoverysysteme zu Nutze, indem sie eine Transaktionshistorie (Transaktionslog) analysieren um eine Datenbank in logisch konsistenter Form wiederherzustellen. Solche Datenbank-Recoverysysteme haben einen großen Bedarf an Arbeitsspeicher bzw. Festplattenspeicherplatz und stellen hohe Anforderungen an die Rechenleistung des Systems da die Logdateien in der Regel sehr umfangreich sind. Die Speicherung, das Laden und das Verarbeiten dieser Logdateien im Zugang einer Datenbank-Rücksetzung auf einen bestimmten Zeitpunkt in der Vergangenheit verbrauchen daher einige Ressourcen.

In einem weiteren Aspekt können transaktionale DBMS auch die Ausführung von Datenbankoperationen erheblich verlangsamen: Es kommt vor, dass Transaktion aufgrund einer anderen bereits laufenden Transaktion nicht ausgeführt werden können, um die ACID Eigenschaften für alle parallel ausgeführten Transaktionen zu gewährleisten. Es kann zu Blockierungen oder gar Verklemmungen (Deadlocks) kommen.

Ein weiteres Problem ergibt sich im Hinblick auf die Konsistenz von Datenbanken, die mehrfach instanziiert, unabhängig voneinander geändert und danach wieder zusammengeführt werden. Hier können leicht Inkonsistenzen auftreten, deren Erkennung und/oder Beseitigung sehr aufwändig und rechenintensiv ist.

US 2013/179186 A1 und US 2006/047895 A1 liefern Beispiele für DBMS aus dem Stand der Technik.

### Technisches Problem und grundlegende Lösungen

Mit den bekannten DBMSs ist es oftmals nur mit erheblichem Ressourcenverbrauch möglich, Datensätze so zu speichern und zu verwalten, dass ein bestimmter, logisch konsistenter Zustand der Vergangenheit wiederherstellbar ist. Das logisch konsistente Zusammenführen mehrerer unabhängig voneinander aktualisierter Datenbankinstanzen der selben Datenbank ist ebenfalls rechnerisch aufwändig. Vor diesem Hintergrund besteht ein Bedarf, ein verbessertes DBMS und entsprechendes Verfahren zur Speicherung von Datensätzen in Datenbanken bereitzustellen, welche die vorangehend erwähnten Nachteile zumindest teilweise vermeiden.

Die der Erfindung zugrundeliegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein erstes Datenverarbeitungssystem mit einem ersten DBMS und einer ersten Echtzeituhr. Das erste DBMS umfasst eine erste Datenbank mit einer Vielzahl von Datensätzen. Die Datensätze beinhalten jeweils mehrere Feldwerte, wobei jeder der Feldwerte mit einem Zeitstempel verknüpft gespeichert ist. Das erste DBMS ist konfiguriert zum:
- Empfangen eines ersten Schreibkommandos zum Ändern eines Feldwerts eines der Datensätze der ersten Datenbank;
- Als Antwort auf den Empfang des ersten Schreibkommandos:
   o Empfangen einer aktuellen Zeit von der ersten Echtzeituhr; beispielsweise kann die aktuelle Zeit von der ersten Echtzeituhr durch das erste DBMS in Antwort auf den Empfang des ersten Schreibkommandos von der ersten Echtzeituhr angefordert werden oder aus der ersten Echtzeituhr ausgelesen werden;
   o Speichern einer Kopie des Datensatzes, dessen Feldwert durch das Schreibkommando geändert werden soll, in die ersten Datenbank, wobei die Datensatzkopie einen gemäß dem ersten Schreibkommando geänderten Feldwert anstatt des bisherigen Feldwerts aufweist, wobei der geänderte Feldwert mit einem Zeitstempel, der die von der ersten Echtzeituhr empfangene aktuelle Zeit angibt, verknüpft gespeichert ist, wobei ein oder mehrere der anderen Feldwerte der Datensatzkopie jeweils mit einem Zeitstempel verknüpft gespeichert sind, der eine andere Zeit angibt, oder wobei alle anderen Feldwerte der Datensatzkopie jeweils mit einem Zeitstempel, der die von der ersten Echtzeituhr bestimmte Zeit angibt, verknüpft gespeichert sind.

Das erste DBMS beinhaltet eine Importschnittstelle, die zum Import von weiteren Datensätzen in die erste Datenbank ausgebildet ist. Die weiteren Datensätze bestehen jeweils aus mehreren Feldwerten und mit den Feldwerten verknüpften Zeitstempeln.

Die Merkmale können vorteilhaft sein, da die Zeitstempel feldwertbezogen gespeichert werden und von einer Echtzeituhr stammen. Es ist also möglich, für jeden einzelnen Feldwert den Zeitpunkt seiner Erstellung bzw. Speicherung festzustellen und eine eindeutige Aussage darüber zu treffen, ob ein bestimmter Feldwert jünger ist als der entsprechende Feldwert eines anderen Datensatzes. Außerdem werden existierende Feldwerte nicht geändert, es wird vielmehr eine Kopie des bestehenden Datensatzes erstellt und die Änderungen in der Kopie vorgenommen. Frühere Versionen eines Datensatzes verbleiben in der ersten Datenbank. Um den Inhalt der ersten Datenbank an einem ganz bestimmten Zeitpunkt zu rekonstruieren ist also kein umfangreiches Transaktionslog und dessen Analyse erforderlich. Es ist vielmehr ausreichend, die feldwertbezogenen Zeitstempel auszuwerten um alle Datensätze zu identifizieren und bei der Verarbeitung von Datenbankabfragen zu ignorieren, deren Zeitstempel jünger ist als der Zeitpunkt, auf welchen die Datenbank "zurückgesetzt" werden soll. Somit bietet die erste Datenbank dank der feldwertbezogenen Zeitstempel ihr eigenes "Log", welches ein logisches (durch Ignorieren jüngerer Feldwerte und der diese enthaltenen Datensätze) oder physisches (durch Löschen jüngerer Feldwerte und die sie enthaltenen Datensätze) Zurücksetzen der ersten Datenbank auf einen bestimmten Zeitpunkt erlaubt.

In einem weiteren vorteilhaften Aspekt kann die erste Datenbank auch weitere Datensätze importieren und diese in logisch und chronologisch konsistenter Weise mit den bereits existierenden Datensätzen zusammenführen. Da die Zeitstempel von einer ersten Echtzeituhr erzeugt werden, ist die in den Zeitstempeln repräsentierte Zeitangabe "objektiv" und unabhängig von dem Computersystem auf welchem das erste DBMS instanziiert ist. Werden nun weitere Datensätze importiert, deren Zeitstempel ebenfalls mit einer Echtzeituhr erstellt wurden, können die Zeitstempel der Gesamtheit der zusammengeführten und in der ersten Datenbank gespeicherten Datensätze sogar eine Art "datenbankinhärentes Log" repräsentieren, das die Wiederherstellung des Inhalts einer "Gesamtdatenbank" an einem beliebigen Zeitpunkt erlaubt, obwohl diese Gesamtdatenbank an diesem Zeitpunkt nicht existierte sondern vielmehr mehrere Instanzen der gleichen Datenbank auf unterschiedlichen Datenverarbeitungssystemen existierten, welche unabhängig voneinander modifiziert und dann zu einem späteren Zeitpunkt wieder zusammengeführt wurden. Eine solche mehrfache Instanziierung, paralleler Betrieb und Aktualisierung der Datenbankinstanzen und deren anschließende Zusammenführung kann aus vielen Gründen vorteilhaft sein. Beispielsweise kann es die Rechenlast eines zentralen Datenbankservers reduzieren wenn Änderungen z.B. tagsüber an mehreren unterschiedlichen Datenbankinstanzen auf unterschiedlichen Rechnern vorgenommen werden und die geänderten Datenbankinstanzen dann an einem späteren Zeitpunkt, z.B. nachts bei geringerer Last, über eine Importschnittstelle des ersten DBMS zusammengeführt und in der ersten Datenbank gemeinsam und konsolidiert gespeichert werden.

In einer Ausführungsform wurden alle Zeitstempel der importierten weiteren Datensätze mit einer Echtzeituhr des Datenverarbeitungssystems erstellt, welches die weiteren Datensätze bisher gespeichert, verwaltet und aktualisiert hatte.

Nach Ausführungsformen ist das erste DBMS ferner dazu konfiguriert, die importierten weiteren Datensätze und die Datensätze der ersten Datenbank zusammenzuführen. Dies kann z.B. dadurch geschehen dass die importierten Datensätze in der ersten Datenbank gespeichert werden. Das erste DBMS kann ferner dazu konfiguriert sein, alle Datensätze zu identifizieren und bei der Verarbeitung von Datenbankabfragen zu ignorieren, deren Zeitstempel jünger ist als der Zeitpunkt, auf welchen die Datenbank "zurückgesetzt" werden soll. Dieser Zeitpunkt der Zurücksetzung kann z.B. von einem Nutzer über eine GUI oder über eine Konfigurationsdatei eingegeben bzw. bereitgestellt werden. Das Ignorieren kann z.B. so erfolgen, dass Datensätze mit jüngerem Zeitstempel gelöscht werden. Vorzugsweise wird das Ignorieren aber dadurch bewirkt, dass ein Datenbankindex der ersten Datenbank mit den weiteren Datensätzen erstellt wird, der selektiv nur Token von Datensätzen enthält, deren Zeitstempel älter ist als der Zeitpunkt, auf welchen die Datenbank "zurückgesetzt" werden soll. Dieser Datenbankindex wird vom ersten DBMS bei der Abarbeitung von Suchanfragen verwendet, sodass jüngere, nicht indizierte Datensätze automatisch nicht berücksichtigt werden, was einer logischen Zurücksetzung gleichkommt.

In einer Ausführungsform, die in Form eines ersten Betriebsmodus des ersten DBMS implementiert sein kann, wird eine Kopie eines bestehenden Datensatzes dadurch erstellt, dass in der neuen Kopie ein Feldwert geändert wird und der Zeitstempel des geänderten Feldwerts die Zeit dieser Änderung angibt. Alle übrigen, unveränderten Feldwerte der Datensatzkopie behalten jeweils ihre Zeitstempel, die sie im ursprünglichen, kopierten Datensatz hatten, bei.

In einer anderen Ausführungsform, die in Form eines zweiten Betriebsmodus des ersten DBMS implementiert sein kann, wird eine Kopie eines bestehenden Datensatzes dadurch erstellt, dass in der neuen Kopie ein Feldwert geändert wird und der Zeitstempel des geänderten Feldwerts die Zeit dieser Änderung angibt. Alle übrigen, unveränderten Feldwerte der Datensatzkopie behalten sind jeweils mit einem Zeitstempel verknüpft gespeichert, der ebenfalls die Zeit der Änderung des einen Feldwerts angibt.

Nach Ausführungsformen ist die Importschnittstelle dazu konfiguriert, selektiv nur solche weitere Datensätze zu importieren, die konfliktfrei sind.

Nach Ausführungsformen ist die Importschnittstelle konfiguriert zur Identifikation derjenigen der weiteren Datensätze, welche konfliktfrei sind (also z.B. Datensätze, die keine logischen Inkonsistenzen in die erste Datenbank einführen). Die konfliktfreien weiteren Datensätze beinhalten:
- Datensätze, die einen neuen Datensatz und nicht eine geänderte Kopie eines in der ersten Datenbank existierenden Datensatzes darstellen; oder
- Datensätze, die eine geänderte Kopie eines der Datensätze der ersten Datenbank darstellen, wobei die geänderte Kopie ausschließlich Feldwerte beinhaltet, deren Zeitstempel sämtlich gleichalt oder jünger sind als eine Referenzzeit.

Die Referenzzeit wird vorzugsweise für einzelne Feldwerte individuell vergeben, sodass unterschiedliche Feldwerte des gleichen Datensatzes unterschiedliche Referenzzeiten haben können.

Die Referenzzeit für einen bestimmten Feldwert kann z.B. der Zeitstempel des entsprechenden Feldwertes der jüngsten in der ersten Datenbank bereits gespeicherten Kopie des Datensatzes, der den bestimmten Feldwert beinhaltet, sein. Es wird also verglichen ob alle Zeitstempel eines importierten Datensatzes jünger oder gleichalt sind wie die Zeitstempel der jüngsten Version (Kopie) des gleichen Datensatzes (mit z.B. der gleichen Datensatz-ID) in der ersten Datenbank. Falls dies der Fall ist, gilt der importierte Datensatz als konfliktfrei.

Nach Ausführungsformen gibt die Referenzzeit einen Rück-Replikationszeitpunkt eines Datenwertes an, also eines Zeitpunktes, an welchem ein Datenwert, der ursprünglich in der ersten Datenbank enthalten war, der als Kopie in der zweiten Datenbank gespeichert und dort modifiziert wurde, in modifizierter Form in der ersten Datenbank "zurück"-gespeichert ("Zurückrepliziert") wurde. Dies kann insbesondere bei verteilten Datenbanksystemen mit einer zentralen ersten Datenbank und mehreren zweiten Datenbanken ("Client-Datenbanken") vorteilhaft sein, da Konflikte, die durch asynchrone Modifikation von Kopien des selben Datenwerts durch zwei oder mehr Clientsysteme auftreten können, vermieden werden. Dies soll an folgendem Beispiel verdeutlicht werden:
Die erste Datenbank könnte ein CRM System einer Firma sein. Die aktuellsten Versionen aller oder einiger der Datensätze der ersten Datenbank werden zunächst an zwei oder mehr Clientsysteme, die jeweils eine eigene zweite Datenbank lokal gespeichert haben, in Kopie übertragen. Die Kopien der Datenwerte werden von den Client-Systemen in der jeweiligen zweiten Datenbank gespeichert, z.B. an einem bestimmten Tag um 9:00 Uhr morgen, und dort unabhängig voneinander modifiziert, einmal z.B. um 10:30 Uhr und einmal um 11:45 Uhr. Beispielsweise können Außendienstmitarbeiter den Status von Verkaufsprojekten oder den Verfügbarkeitsstatus von Demonstrationsware modifizieren und die Modifikation in ihrer lokalen zweiten Datenbank in Form weiterer Datenwerte speichern. Die Modifikationen erfolgen vorzugsweise individuell für einzelne Feldwerte. Solange die Außendienstmitarbeiter verschiedene Projekte bzw. Demonstrationsgegenstände bearbeiten, ergibt sich kein Konflikt bei der Rückreplikation der modifizierten Datensätze in die erste Datenbank. Falls aber beide Außendienstmitarbeiter beispielsweise das gleiche Demonstrationsgerät für den gleichen Tag für sich reservieren und den zugehörigen Feldwert entsprechend modifizieren, kann sich ein Konflikt ergeben, wenn die beiden Außendienstmitarbeiter diese modifizierten Feldwerte zu der ersten Datenbank zurückreplizieren. Dies wird nach Ausführungsformen der Erfindung dadurch verhindert, dass das erste DBMS, sobald es eine jüngere Version eines bestehenden Datensatzes von einer der zweiten Datenbanken bzw. einem der Clientsysteme empfängt, diesen Feldwert als neueste Version des Feldwerts in der ersten Datenbank speichert und den Zeitpunkt des Empfangs dieser neuen Version als Referenzzeit dieses neuen Feldwerts ebenfalls in der ersten Datenbank speichert. Dies ist problemlos möglich, wenn der Referenzzeitwert des ursprünglich in der ersten Datenbank gespeicherten Datenwerts älter ist als der Zeitpunkt der Rückreplikation der modifizierten Version dieses Datenwerts. Beispielsweise könnte der Außendienstmitarbeiter, der den Datenwert um 11:45 Uhr modifiziert hat, die modifizierte Version um 17:34 Uhr an die erste Datenbank zurückreplizieren. Die Referenzzeit dieses Datenwertes wäre dann 17:34 Uhr.

Versucht der Außendienstmitarbeiter, der eine lokale Kopie dieses Datenwerts um 10:30 Uhr modifiziert hat, bzw. dessen Clientsystem, die modifizierte Version dieses Feldwerts ebenfalls in der ersten Datenbank zu speichern, so wird die Schnittstelle des ersten DBMS diese Rückreplikations-Aktion unterbinden, denn der Zeitstempel dieses modifizierten Datenwerts (10:30 Uhr) ist älter als die Referenzzeit (17:34 Uhr).

Die Importschnittstelle ist also nach Ausführungsformen dazu konfiguriert, selektiv die identifizierten konfliktfreien weiteren Datensätze in die erste Datenbank zu speichern und die Speicherung aller übrigen weiteren, potentiell konfliktbehafteten, Datensätze in der ersten Datenbank zeitweise oder permanent zu unterbinden.

Nach Ausführungsformen sendet das erste DBMS eine Fehlermeldung an das zweite DBMS, falls es im Zuge des Empfangs eines modifizierten Feldwertes ("Rückreplikation") feststellt, dass dessen Zeitstempel älter ist als seine Referenzzeit. In Antwort auf den Empfang dieser Fehlermeldung lädt das zweite DBMS bzw. das dieses beinhaltende Client-Computersystem eine aktuelle Kopie dieses und optional weiterer Feldwerte, speichert sie in der lokalen zweiten Datenbank und führt lokale Konfliktbehebungsroutinen durch. Beispielsweise kann das fragliche Demonstrationsgerät an einem anderen Tag, an dem dieses noch nicht für Kollegen gebucht ist, reserviert werden und eine neue Version des Feldwerts, der diesen anderen Tag repräsentiert, in die erste Datenbank zurückrepliziert werden.

Datensätze, die einen neuen Datensatz und nicht eine geänderte Kopie eines in der ersten Datenbank existierenden Datensatzes darstellen, können z.B. Datensätze sein, die in der zweiten Datenbank neu erstellt wurden, also nicht geänderte Kopien von bestehenden Datensätzen der ersten Datenbank darstellen.

Nach Ausführungsformen erfolgt die Identifikation der konfliktfreien weiteren Datensätze durch Datenbankoperationen, die vom ersten DBMS bereitgestellt werden. Dieses kann beispielsweise die Zeitstempel und/oder IDs der weiteren Datensätze auf sehr effiziente Weise mit den Zeitstempeln und/oder IDs der bereits in der ersten Datenbank gespeicherten Datensätze vergleichen um festzustellen, ob ein bestimmter Datensatz eine jüngere Version eines älteren, existierenden Datensatzes ist oder einen anderen Datensatz darstellt.

Dies kann vorteilhaft sein, da eine sehr schnelle und zuverlässige Identifikation von Datensätzen, die Inkonsistenzen in die erste Datenbank einbringen können, bereitgestellt wird: zeigen beispielsweise die Datensatz-IDs an, dass ein bestimmter weiterer Datensatz ein neuer Datensatz, also keine Kopie eines bereits in der ersten Datenbank existierenden Datensatzes ist, kann es keinen logischen Konflikt bzw. keine Inkonsistenz mit den bestehenden Datensätzen der ersten Datenbank geben und ein Import ist problemlos möglich. Auch falls die Zeitstempel eines weiteren Datenwerts alle gleichalt oder jünger sind als ein in der ersten Datenbank existierender Datensatz mit gleicher ID kann nach Ausführungsformen ein Import als konfliktfrei angesehen werden, z.B. weil in einem Anwendungsszenario der Import eine Aufnahme aller auf einem Client-System erstellten und modifizierten Datensatzkopien bewirken soll und zwischenzeitlich in der ersten Datenbank erstellte, modifizierte Kopien bei Bedarf leicht ausgefiltert werden können indem Suchabfragen immer auf die aktuellste Version der Datensatzkopien gerichtet werden.

In manchen Ausführungsformen wird ein weiterer, zu importierender Datensatz dann als konflikthaft identifiziert falls zumindest einer seiner Zeitstempel älter ist als der korrespondierende Zeitstempel einer Kopie des gleichen Datensatzes, der bereits in der ersten Datenbank existiert.

Nach bevorzugten Ausführungsformen werden weitere Datensätze, deren Feldwerte und Zeitstempel alle identisch sind zu den Feldwerten und Zeitstempeln eines in der ersten Datenbank bereits existierenden Datensatzes permanent zurückgehalten, also nicht in die erste Datenbank importiert.

Nach Ausführungsformen umfasst das zweitweise oder permanentes Unterbinden der Speicherung ein Bereitstellen der übrigen der weiteren Datensätze an ein Applikationsprogramm, welches Zugriff auf die erste Datenbank hat und dazu konfiguriert ist, Konflikte zwischen den übrigen weiteren Datensätzen und den bereits in der ersten Datenbank gespeicherten Datensätzen durch Modifikation oder Filterung der übrigen weiteren Datensätze aufzulösen. Die modifizierten und/oder gefilterten übrigen Datensätze werden dann in der ersten Datenbank gespeichert. Beispielsweise können die importierten Datensätze zunächst in einer temporären Tabelle gespeichert werden, auf die das Applikationsprogramm zugreifen kann, um die konflikthaften weiteren Datensätze so zu modifizieren, dass sie konfliktfrei importiert werden können. Falls dies bei einigen oder allen der weiteren Datensätzen nicht möglich ist, löscht das Applikationsprogramm diese übrigen weiteren Datensätze ohne diese in die erste Datenbank zu speichern.

Die Verwendung eines Applikationsprogramms selektiv zur Modifikation oder Löschung von konflikthaften Datensätzen, die durch ein DBMS (sehr effizient mittels Zeitstempeln und/oder IDs) identifiziert wurden, kann vorteilhaft sein, da Applikationsprogramme eine sehr komplexe Logik zur Lösung logischer Konflikte implementieren können, die in der Regel mit dem begrenzten Satz an Datenbankoperationen nicht gut dargestellt werden können. Der Nachteil der geringeren Performanz der Datenverarbeitung in einem Applikationsprogramm gegenüber einer Datenbankbasierten Verarbeitung wird durch die Vorselektion der konfliktbehafteten Datensätze mittels Datenbankroutinen des ersten DBMS kompensiert.

Nach Ausführungsformen ist das erste DBMS so konfiguriert, dass es während des Speicherns der Datensatzkopie in der ersten Datenbank ein paralleles Erstellen und Speichern weiterer Kopien des kopierten Datensatzes erlaubt, etwa als Antwort auf ein Schreibkommando zur Änderung dieses Datensatzes, der dann jedoch nicht geändert, sondern kopiert und als modifizierte Kopie gespeichert wird. Zusätzlich oder alternativ dazu unterlässt das erste DBMS auch eine Überprüfung der logischen Konsistenz des geänderten Feldwerts mit dem Inhalt der schon in der ersten Datenbank existierenden Datensätze für das Speichern der Datensatzkopie in die erste Datenbank. Es gibt also keine transaktionalen Sperren ("Locks") die die parallele Erstellung von Datensatzkopien als Antwort auf eingehende Schreib- und Updatekommandos blockieren. Dies kann vorteilhaft sein, da die Verarbeitung von Datensätzen schneller und ressourcenschonender geschieht wenn mehrere Kommandos zum Ändern des gleichen Datensatzes nicht aufeinander warten müssen, sondern parallel arbeiten können. Dies ist möglich, da beide Prozesse nicht einen bestehenden Datensatz ändern sondern vielmehr zwei Kopien des gleichen Datensatzes erstellen. Diese werden sich im Hinblick auf ihre Zeitstempel zumindest geringfügig voneinander unterscheiden, da vorzugsweise die Uhren die zur Erstellung der Zeitstempel der Datensätze in der ersten Datenbank und der importierten Datensätze verwendet werden, eine sehr hohe zeitliche Auflösung haben. Vorzugsweise ist die Auflösung mindestens 1 Millisekunde.

Nach Ausführungsformen führt das erste DBMS das Schreiben der Datenbankkopie in die erste Datenbank durch ohne den Schreibzugriff in eine Datenbanktransaktion einzubetten, die die Wahrung der Datenkonsistenz der geschriebenen Datensatzkopie mit den existierenden Datensätzen garantiert.

Dies kann vorteilhaft sein da die Verarbeitung von Datensätzen schneller und ressourcenschonender geschieht. Ein transaktionaler Kontext kann weggelassen werden, da die Zeitstempel eine eindeutige Auskunft über den Zustand der ersten Datenbank zu jedem beliebigen Zeitpunkt geben und da Datensätze der ersten Datenbank nicht gelöscht, sondern allenfalls dupliziert und als modifizierte Kopie zusätzlich zum ursprünglichen Datensatz in der ersten Datenbank gespeichert werden.

Nach Ausführungsformen ist das erste DBMS dazu konfiguriert, regelmäßig und automatisch einen Datenbankindex zu erstellen. Die Erstellung des Datenbankindex umfasst jeweils folgende Schritte:
- Tokenisierung der Feldwerte der in der ersten Datenbank gespeicherten Datensätze;
- Speichern von durch die Tokenisierung erzeugten Token in einem durchsuchbaren Datenbankindex;
- Speichern eines von der ersten Echtzeituhr zum Zeitpunkt der Indexerstellung bestimmten Zeitpunkts in Verbindung mit dem erstellten Datenbankindex;

Beispielsweise kann der Index regelmäßig, etwa stündlich oder einmal am Tag automatisch erstellt werden.

Das erste DBMS ist dazu konfiguriert, ein erstes Lesekommando zum Lesen von in der ersten Datenbank gespeicherten Datensätzen zu empfangen und als Antwort auf den Empfang des Lesekommandos, den Datenbankindex nach Datensätzen, die einen in dem Lesekommando spezifizierten Suchwert beinhalten, zu durchsuchen. Der Zeitpunkt der Indexerstellung bestimmt somit, welche Datensätze im Index gefunden und zurückgegeben werden.

Nach Ausführungsformen werden die Zeitstempel mitindiziert und erlauben die Zurückgabe selektiv nur von Datensätzen, die zu einem bestimmten, in der Suchanfrage spezifizierten Zeitpunkt, bereits in der ersten Datenbank vorhanden waren oder zu diesem Zeitpunkt in einer anderen Datenbank vorhanden waren und dann später konfliktfrei in die erste Datenbank importiert wurden.

Erfindungsgemäß ist das erste DBMS so konfiguriert, dass es die Durchführung von Schreibkommandos nicht protokolliert oder nur in einem so reduzierten Umfang protokolliert, dass eine Rekonstruktion des Inhalts der ersten Datenbank zu einem bestimmten Zeitpunkt anhand der Logdaten des ersten DBMS nicht möglich ist. Dies kann vorteilhaft sein, da weniger Speicherplatz durch das log konsumiert wird. Eine Rekonstruktion des Inhalts der ersten Datenbank zu einem bestimmten Zeitpunkt erfolgt gemäß Ausführungsformen dadurch, dass das erste DBMS in Antwort auf Änderungskommandos bezüglich einzelner Datensätze der ersten Datenbank diese Datensätze nicht ändert sondern stattdessen geänderte Kopien dieser Datensätze in die erste Datenbank speichert und dadurch, dass die Datenbankabfragen so gewählt werden, dass selektiv nur Datensätze der ersten Datenbank berücksichtigt werden, deren Zeitstempel anzeigt, dass die Datensätze bereits vor einem bestimmten Zeitpunkt in der ersten Datenbank vorhanden waren.

Erfindungsgemäß ist das erste DBMS konfiguriert zum Empfang eines Rücksetzungskommandos bezüglich der ersten Datenbank. Das Rücksetzungskommando spezifiziert einen Zeitpunkt in der Vergangenheit, auf welchen der Inhalt der ersten Datenbank zurückgesetzt werden soll. Das erste DBMS oder ein mit diesem operativ verbundenes Applikationsprogramm erstellt als Antwort auf den Empfang des Rücksetzungskommandos, einen neuen Datenbankindex. Die Erstellung umfasst:
- Identifikation aller Datensätze in der ersten Datenbank, deren Feldwertassoziierte Zeitstempel alle älter sind als der im Rücksetzungskommando spezifizierte Zeitpunkt;
- Tokenisierung der Feldwerte selektiv nur der identifizierten Datensätze;
- Speichern von durch die Tokenisierung der identifizierten Datensätze erzeugten Token in einem durchsuchbaren Datenbankindex;
- Verwenden des durchsuchbaren Datenbankindex anstatt eines bisher verwendeten Datenbankindex der ersten Datenbank bei der Bearbeitung von Lesekommandos.

In einem weiteren Aspekt betrifft die Erfindung ein verteiltes Computersystem, welches das erste Datenverarbeitungssystem nach einem der vorigen Ausführungsformen in Form eines ersten Computersystems beinhaltet. Das verteilte Computersystem beinhaltet ferner ein zweites Datenverarbeitungssystem in Form eines zweiten Computersystems. Das zweite Datenverarbeitungssystem umfasst ein zweites DBMS und eine zweite Echtzeituhr. Das zweite DBMS umfasst eine zweite Datenbank mit einer Vielzahl von Datensätzen, wobei diese Datensätze jeweils mehrere Feldwerte beinhalten, die mit einem Zeitstempel verknüpft gespeichert ist. Beispielsweise kann der Inhalt der zweiten Datenbank zu einem bestimmten Zeitpunkt eine vollständige oder teilweise Kopie der Datensätze der ersten Datenbank beinhalten.

Das zweite DBMS ist konfiguriert zum Empfangen eines zweiten Schreibkommandos zum Ändern eines Feldwerts eines der Datensätze der zweiten Datenbank. Als Antwort auf den Empfang des zweiten Schreibkommandos ist das zweite DBMS dazu konfiguriert, folgende Schritte auszuführen:
- Empfangen einer aktuellen Zeit von der zweiten Echtzeituhr; beispielsweise kann die aktuelle Zeit von der zweiten Echtzeituhr durch das zweite DBMS in Antwort auf den Empfang des zweiten Schreibkommandos von der zweiten Echtzeituhr angefordert werden oder aus der zweiten Echtzeituhr ausgelesen werden; und
- Speichern einer Kopie des Datensatzes, dessen Feldwert durch das zweite Schreibkommando geändert werden soll, in die zweite Datenbank, wobei die Datensatzkopie einen gemäß dem zweiten Schreibkommando geänderten Feldwert anstatt des bisherigen Feldwerts aufweist, wobei der geänderte Feldwert mit einem Zeitstempel, der die von der zweiten Echtzeituhr empfangene aktuelle Zeit angibt, verknüpft gespeichert ist, wobei ein oder mehrere der anderen Feldwerte dieser Datensatzkopie jeweils mit einem Zeitstempel verknüpft gespeichert sind, der eine andere Zeit (als die von der zweiten Echtzeituhr aktuell bestimmte Zeit) angibt, oder wobei alle anderen Feldwerte der Datensatzkopie jeweils mit einem Zeitstempel, der die von der zweiten Echtzeituhr bestimmte Zeit angibt, verknüpft gespeichert sind;

Das zweite DBMS beinhaltet eine Exportschnittstelle zum Export von Datensätzen der zweiten Datenbank einschließlich deren Zeitstempeln, um die exportierten Datensätze als die weiteren Datensätze der Importschnittstelle des ersten DBMS zur Verfügung zu stellen.

Dies kann vorteilhaft sein, da die Datensätze die von dem zweiten DBMS verwaltet werden, ebenfalls Zeitstempel einer Echtzeituhr beinhalten und somit über die Import/Exportschnittstellen des ersten und zweiten DBMS mit den Datensätzen des ersten DBMS in konsistenter Weise zusammengeführt werden können.

Vorzugsweise ist das zweite DBMS in gleicher oder analoger Weise wie Ausführungsformen des ersten DBMS konfiguriert, ändert also keine Datensätze sondern speichert stattdessen geänderte Kopien eines zu ändernden Datensatzes in der zweiten Datenbank mit entsprechend aktualisierten Echtzeit-Stempeln die die Änderungszeit anzeigen.

Somit kann der Inhalt einer Datenbank zu einem Zeitpunkt t0 auf mehrere Computersysteme in Kopie verteilt und dort unabhängig vom Quellsystem modifiziert werden. Die anschließende Zusammenfügung kann sehr effizient erfolgen und sogar eine Rekonstruktion eines Zustands einer "virtuellen Gesamtdatenbank" zu einem bestimmten, gewünschten Zeitpunkt ermöglichen obwohl faktisch zu diesem Zeitpunkt die in der "virtuellen Gesamtdatenbank" vorhandenen Änderungen über die erste, zweite und ggf. noch weitere Datenbanken verteilt gespeichert waren.

Nach Ausführungsformen sind das erste und zweite DBMS so konfiguriert, dass neue Datensätze oder geänderte Kopien von vorhandenen Datensätzen jeweils in der ersten Datenbank und in der zweiten Datenbank unabhängig voneinander erstellt werden.

Nach Ausführungsformen ist das erste Datenverarbeitungssystem ein Datenbankserver und das zweite Datenverarbeitungssystem ein mobiles Computersystem, z.B. ein Notebook, ein Smartphone oder ein Tablet-Computer. Der Inhalt der zweiten Datenbank ist oder wird initialisiert als eine vollständige oder teilweise Kopie der Datensätze der ersten Datenbank.

Diese Ausführungsform kann in vielen Anwendungsszenarien vorteilhaft sein. Beispielsweise kann es sich bei dem ersten DBMS um eine zentrale Datenbank einer Firma handeln, die Daten über Kunden und Produkte dieser Firma beinhaltet. Bei der Firma können eine Vielzahl von Außendienstmitarbeitern tätig sein, die sich z.B. am Morgen vor Beginn ihrer Arbeit eine aktuelle Kopie des Inhalts der zentralen Datenbank oder von Teilen dieser zentralen Datenbank auf ihren Dienstrechner, z.B. ein Notebook laden. Die Außendienstmitarbeiter können dann während des Einsatzes beim Kunden Änderungen an ihrer lokalen (Teil) Kopie der Datenbank ("zweite Datenbank") vornehmen. Wenn der Mitarbeiter vom Kundenbesuch zurückkommt und im Büro oder zu Hause eine schnelle Internetverbindung verfügbar ist können die Änderungen in der lokalen Datenbank durch den beschreibenden Export-Import Mechanismus über das Netzwerk an die zentrale Datenbank ("erste Datenbank") zurücküberführt werden, wobei vorzugsweise konflikthafte Datensätze identifiziert, wenn möglich konfliktlösend modifiziert oder herausgefiltert werden.

Nach Ausführungsformen ist das zweite DBMS mit dem ersten Datenverarbeitungssystem über eine Netzwerkverbindung verbunden, über welche eine Replikation von Datensätzen von der ersten zur zweiten Datenbank und/oder von der zweiten zu der ersten Datenbank erfolgt. Bei der Netzwerkverbindung handelt es sich um eine Verbindung, die wiederholt unterbrochen ist, z.B. um eine Internetverbindung, die zeitweise nicht verfügbar ist, weil sich das zweite Computersystem z.B. in einem abgeschirmten Gebäude befindet. Das erste DBMS und das zweite DBMS sind jeweils so konfiguriert, dass auch während der Unterbrechung neue Datensätze oder geänderte Kopien von vorhandenen Datensätzen jeweils in der ersten Datenbank und in der zweiten Datenbank unabhängig voneinander erstellt werden können.

Nach Ausführungsformen ist das zweite DBMS so konfiguriert, dass es automatisch feststellt, ob eine Netzwerkverbindung zum ersten DBMS besteht. Falls die Netzwerkverbindung besteht, exportiert das zweite DBMS Datensätzen der zweiten Datenbank einschließlich deren Zeitstempeln über die Exportschnittstelle, und überträgt diese über das Netzwerk an das erste DBMS. Die Überprüfung der Netzwerkverbindung und der Export kann auch von einem Applikationsprogram oder Plug-In durchgeführt werden, das mit dem zweiten DBMS operativ verbunden ist und daher als funktionale Komponente des zweiten DBMS verstanden wird. Das erste DBMS importiert die exportierten Datensätze über seine Importschnittstelle.

Nach Ausführungsformen beinhaltet das System ein oder mehrere weitere zweite Datenverarbeitungssysteme, die jeweils die in den hierin beschriebenen Ausführungsformen für das zweite Datenverarbeitungssystem spezifizierten Eigenschaften aufweisen.

In einem weiteren Aspekt betrifft die Erfindung ein elektronisches System zur Prüfung der Vertrauenswürdigkeit eines Protokolls der Interaktion eines ersten und eines zweiten Bauteils. Das elektronische System umfasst:
- das erste elektronisches Bauteil,
- das zweite elektronisches Bauteil,
- eine Kontrolleinheit zur gleichzeitigen Ausgabe eines aktionsauslösenden Kommandos an das erste und zweite elektronische Bauteil,
- das erste Datenverarbeitungssystem nach einer der hier beschriebenen Ausführungsformen, wobei zumindest einige der Datenobjekte der ersten Datenbank Aktionen des ersten Bauteils protokollieren einschließlich der in dem aktionsauslösenden Kommando spezifizierten Aktion, wobei der Zeitstempel der Feldwerte in der ersten Datenbank die Zeit der Durchführung einer Aktion durch das erste Bauteil angibt,
- ein zweites DBMS mit einer zweiten Datenbank mit einer Vielzahl von Datensätzen, wobei diese Datensätze jeweils mehrere Feldwerte beinhalten, wobei jeder der Feldwerte mit einem Zeitstempel verknüpft gespeichert ist, wobei zumindest einige der Datenobjekte der zweiten Datenbank Aktionen des zweiten Bauteils protokollieren einschließlich der in dem aktionsauslösenden Kommando spezifizierten Aktion, wobei der Zeitstempel der Feldwerte in der zweiten Datenbank von einer zweiten Echtzeituhr geliefert wird und die Zeit der Durchführung einer Aktion durch das zweite Bauteil angibt, wobei das zweite DBMS eine Exportschnittstelle zum Export von Datensätzen der zweiten Datenbank einschließlich deren Zeitstempeln beinhaltet, um die exportierten Datensätze über die Importschnittstelle des ersten DBMS mit den Datensätzen der ersten Datenbank zusammenzuführen um ein gemeinsames Interaktionsprotokoll des ersten und zweiten elektronischen Bauteils bereitzustellen;
- ein Applikationsprogramm, das dazu konfiguriert ist, den Zeitstempel der Ausführung der in dem aktionsauslösenden Kommando spezifizierten Aktion durch das erste Bauteil mit dem Zeitstempel der Ausführung der in dem aktionsauslösenden Kommando spezifizierten Aktion durch das zweite Bauteil zu vergleichen und bei Überschreiten eines maximalen zeitlichen Abstands der verglichenen Zeitstempel eine Warnung auszugeben, dass das gemeinsame Interaktionsprotokoll nicht vertrauenswürdig ist.

In einem weiteren Aspekt betrifft die Erfindung ein computerimplementiertes Verfahren zur Speicherung von Datensätzen. Das Verfahren umfasst:
- Bereitstellung eines ersten Datenverarbeitungssystems mit einem ersten DBMS und einer ersten Echtzeituhr, wobei das erste DBMS eine erste Datenbank mit einer Vielzahl von Datensätzen umfasst, wobei die Datensätze jeweils mehrere Feldwerte beinhalten, wobei jeder der Feldwerte mit einem Zeitstempel verknüpft gespeichert ist;
- Empfangen eines ersten Schreibkommandos durch das erste DBMS, wobei das erste Schreibkommando sich auf das Ändern eines Feldwerts eines der Datensätze der ersten Datenbank bezieht;
- Als Antwort auf den Empfang des ersten Schreibkommandos:
   ▪ Empfangen einer aktuellen Zeit von der ersten Echtzeituhr; beispielsweise kann die aktuelle Zeit von der ersten Echtzeituhr durch das erste DBMS in Antwort auf den Empfang des ersten Schreibkommandos von der ersten Echtzeituhr angefordert werden oder aus der ersten Echtzeituhr ausgelesen werden;
   ▪ Speichern einer Kopie des Datensatzes, dessen Feldwert durch das Schreibkommando geändert werden soll, in die ersten Datenbank, wobei die Datensatzkopie einen gemäß dem ersten Schreibkommando geänderten Feldwert anstatt des bisherigen Feldwerts aufweist, wobei der geänderte Feldwert mit einem Zeitstempel, der die von der ersten Echtzeituhr empfangene aktuelle Zeit angibt, verknüpft gespeichert ist, wobei ein oder mehrere der anderen Feldwerte der Datensatzkopie jeweils mit einem Zeitstempel verknüpft gespeichert sind, der eine andere Zeit (als die von der ersten Echtzeituhr aktuell bestimmte Zeit) angibt, oder wobei alle anderen Feldwerte der Datensatzkopie jeweils mit einem Zeitstempel, der die von der ersten Echtzeituhr bestimmte Zeit angibt, verknüpft gespeichert sind;
- Import von weiteren Datensätzen über eine Importschnittstelle durch das erste DBMS, wobei die weiteren Datensätze jeweils aus mehreren Feldwerten und mit den Feldwerten verknüpften Zeitstempeln bestehen, in die erste Datenbank.

Nach Ausführungsformen umfasst das Verfahren ferner:
- Identifikation derjenigen der weiteren Datensätze, welche konfliktfrei sind, durch die Importschnittstelle, wobei die konfliktfreien weiteren Datensätze beinhalten:
   ▪ Datensätze, die einen neuen Datensatz und nicht eine geänderte Kopie eines in der ersten Datenbank existierenden Datensatzes darstellen; oder
   ▪ Datensätze, die eine geänderte Kopie eines der Datensätze der ersten Datenbank darstellen, wobei die geänderte Kopie ausschließlich Feldwerte beinhaltet, deren Zeitstempel sämtlich gleichalt oder jünger sind als eine Referenzzeit;
- Speichern selektiv der identifizierten konfliktfreien weiteren Datensätze in die erste Datenbank,
- Zeitweises oder permanentes Unterbinden der Speicherung aller übrigen der weiteren Datensätze in die erste Datenbank.

Nach Ausführungsformen umfasst das Verfahren ferner:
- Bereitstellung eines zweiten Datenverarbeitungssystems mit einem zweiten DBMS und einer zweiten Echtzeituhr, wobei das zweite DBMS eine zweite Datenbank mit einer Vielzahl von Datensätzen umfasst, wobei die Datensätze jeweils mehrere Feldwerte beinhalten, wobei jeder der Feldwerte mit einem Zeitstempel verknüpft gespeichert ist;
- Empfangen eines zweiten Schreibkommandos durch das zweite DBMS, wobei das zweite Schreibkommando sich auf das Ändern eines Feldwerts eines der Datensätze der zweiten Datenbank bezieht;
- Als Antwort auf den Empfang des zweiten Schreibkommandos:
   ▪ Empfangen einer aktuellen Zeit von der zweiten Echtzeituhr; beispielsweise kann die aktuelle Zeit von der zweiten Echtzeituhr durch das zweite DBMS in Antwort auf den Empfang des zweiten Schreibkommandos von der zweiten Echtzeituhr angefordert werden oder aus der zweiten Echtzeituhr ausgelesen werden;
   ▪ Speichern einer Kopie des Datensatzes, dessen Feldwert durch das Schreibkommando geändert werden soll, in die zweite Datenbank, wobei die Datensatzkopie einen gemäß dem zweiten Schreibkommando geänderten Feldwert anstatt des bisherigen Feldwerts aufweist, wobei der geänderte Feldwert mit einem Zeitstempel, der die von der zweiten Echtzeituhr empfangene aktuelle Zeit angibt, verknüpft gespeichert ist, wobei ein oder mehrere der anderen Feldwerte dieser Datensatzkopie jeweils mit einem Zeitstempel verknüpft gespeichert sind, der eine andere Zeit (als die von der zweiten Echtzeituhr aktuell bestimmte Zeit) angibt, oder wobei alle anderen Feldwerte der Datensatzkopie jeweils mit einem Zeitstempel, der die von der zweiten Echtzeituhr bestimmte Zeit angibt, verknüpft gespeichert sind;
- Exportieren von Datensätzen der zweiten Datenbank einschließlich deren Zeitstempeln über eine Exportschnittstelle des zweiten DBMS;
- Übertragung der exportierten Datensätze als die weiteren Datensätze an die Importschnittstelle des ersten DBMS über ein Netzwerk.

In einem weiteren Aspekt betrifft die Erfindung ein Verfahren, mit welchem die Validität eines Interaktionsprotokolls von zwei elektronischen Bauteilen durchgeführt werden kann. Das Verfahren umfasst die Bereitstellung eines ersten und zweiten Datenverarbeitungssystems wie für Ausführungsformen bereits beschrieben. Das Verfahren umfasst:
- Bereitstellen eines ersten und eines zweiten elektronischen Bauteils,
- wobei zumindest einige der Datenobjekte der ersten Datenbank Aktionen des ersten Bauteils protokollieren, wobei der Zeitstempel der Feldwerte in der ersten Datenbank die Zeit der Durchführung einer Aktion durch das erste Bauteil angibt, die von der ersten Echtzeituhr bestimmt wurde,
- wobei zumindest einige der Datenobjekte der zweiten Datenbank Aktionen des zweiten Bauteils protokollieren, wobei der Zeitstempel der Feldwerte in der zweiten Datenbank die Zeit der Durchführung einer Aktion durch das zweite Bauteil angibt, die von der ersten oder einer weiteren Echtzeituhr bestimmt wurde,
- gleichzeitigen Ausgabe eines aktionsauslösenden Kommandos an das erste und zweite elektronische Bauteil durch eine Kontrolleinheit,
   ▪ als Antwort auf den Empfang des aktionsauslösenden Kommandos, Speichern eines Datenobjekts, das die in dem aktionsauslösenden Kommando spezifizierten Aktion angibt, in der ersten Datenbank durch das erste elektronische Bauteil, wobei der Zeitstempel der Feldwerte dieses Datenobjekts die Zeit der Durchführung dieser Aktion durch das zweite Bauteil angibt,
   ▪ als Antwort auf den Empfang des aktionsauslösenden Kommandos, Speichern eines Datenobjekts, das die in dem aktionsauslösenden Kommando spezifizierten Aktion angibt, in der zweiten Datenbank durch das zweite elektronische Bauteil, wobei der Zeitstempel der Feldwerte dieses Datenobjekts die Zeit der Durchführung dieser Aktion durch das zweite Bauteil angibt,
- Importieren von Datensätzen der zweiten Datenbank einschließlich deren Zeitstempeln über die Importschnittstelle des ersten DBMS, um diese mit den Datensätzen der ersten Datenbank zusammenzuführen um ein gemeinsames Interaktionsprotokoll des ersten und zweiten elektronischen Bauteils bereitzustellen;
- Vergleichen des Zeitstempels der Ausführung der in dem aktionsauslösenden Kommando spezifizierten Aktion durch das erste Bauteil mit dem Zeitstempel der Ausführung der in dem aktionsauslösenden Kommando spezifizierten Aktion durch das zweite Bauteil durch ein Applikationsprogramm und Ausgabe einer Warnung, falls ein maximaler zeitlicher Abstand zwischen den verglichenen Zeitstempeln überschritten ist, wobei die Warnung angibt, dass das gemeinsame Interaktionsprotokoll nicht vertrauenswürdig ist.

Nach Ausführungsformen ist das zweite DBMS so konfiguriert, dass es während des Speicherns der Datensatzkopie in der zweiten Datenbank ein paralleles Erstellen und Speichern weiterer Kopien des kopierten Datensatzes erlaubt. Zusätzlich oder alternativ dazu ist es dazu ausgebildet, eine Überprüfung der logischen Konsistenz des geänderten Feldwerts mit dem Inhalt der schon in der zweiten Datenbank existierenden Datensätze für das Speichern der Datensatzkopie in die zweite Datenbank zu unterlassen.

Nach Ausführungsformen ist das erste DBMS so konfiguriert, dass für die erste Datenbank die Isolationsebene "Read Uncommitted" gilt. Zusätzlich oder alternativ dazu ist das zweite DBMS so konfiguriert, dass für die zweite Datenbank die Isolationsebene "Read Uncommitted" gilt.

Die Isolationsebene "Read Uncommitted" erlaubt es dem DBMS bei der Abarbeitung von Leseoperationen jegliche Sperre ignoriert bzw. gar keine Sperren ("Locks") während eines Schreibvorgangs gesetzt werden. In einem solchen Isolationsmodus können in einem herkömmlichen DBMS die Anomalien "Lost Update", "Dirty Read", "Non-Repeatable Read" und das "Phantom Problem" auftreten. Nach Ausführungsformen der Erfindung können diese Inkonsistenzen vermieden werden, indem Leseabfragen konsequent nur auf den Datensätzen mit dem jüngsten Zeitstempeln oder auf den jüngsten Datensätzen, die bereits indexiert wurden, ausgeführt werden.

Nach Ausführungsformen ist das erste und/oder das zweite DBMS ein noSQL-DBMS.

Aspekte der Erfindung können als Verfahren oder Datenverarbeitungssystem beschrieben sein, wobei eine Beschreibung des Verfahrens eine entsprechende Ausgestaltung der Komponenten des Datenverarbeitungssystems impliziert und umgekehrt.

Unter einem "Datenbankmanagementsystem" oder "DBMS" wird im Folgenden ein elektronisches System zur Speicherung und Wiedergewinnung von Daten verstanden. Vorzugsweise werden die Daten in dem DBMS widerspruchsfrei und dauerhaft gespeichert und verschieden Anwendungsprogrammen und Nutzern in bedarfsgerechter Form effizient zur Verfügung gestellt. Ein DBMS kann typischerweise ein oder mehrere Datenbanken beinhalten und die darin enthaltenen Datensätze verwalten. Bei dem DBMS handelt es sich vorzugsweise um ein feldorientiertes DBMS, also um ein DBMS, das dazu konfiguriert ist, Teile einzelner Datensätze, sogenannte "Feldwerte", in mehrere unterschiedliche Felder zu speichern.

Unter einem "Datensatz" wird im Folgenden eine inhaltlich zusammenhängende und gemeinsam von einem Datenbankmanagementsystem verwaltete Menge an Daten verstanden. Ein Datensatz stellt typischerweise die kleinste strukturelle Einheit des Datenbestandes einer bestimmten Datenbank dar. Beispielsweise kann ein einzelner Datensatz ein bestimmtes physisches Objekt, z.B. eine natürliche Person, repräsentieren. Bei der Person kann es sich z.B. um einen Angestellten, einen Patienten, einen Kunden, etc. handeln. Der entsprechende Datensatz kann eine vordefinierte Menge von Attributwerten dieser Person beinhalten (z.B. Name oder Pseudonym, Alter, Größe, Gewicht, Geburtsdatum, Ausweisnummern, Sicherheitszertifikate, Authentifizierungscodes, biometrische Daten und andere).

Beispielsweise kann ein Datensatz eine Gruppe von inhaltlich zusammenhängenden (zu einem Objekt gehörenden) Datenfeldern repräsentieren, z. B. Artikelnummer, Artikelgröße, Artikelfarbe, Artikelname oder ähnliches. Die Felder können aber auch komplexe, zusammengesetzte Feldwerte speichern, z.B. einen Text mit Bildern das eine Produktbeschreibung repräsentiert. Die Feldtypen ,Name', 'Adresse' und 'Geburtsdatum' könnten z.B. die logische Struktur eines Datensatzes zum Objekttyp "Person" bilden. Datensätze entsprechen einer logischen Struktur, die bei der Entwicklung der Datenbank festgelegt wurde und in manchen Ausführungsformen auch noch zur Laufzeit der Datenbank verändert werden kann, z.B. durch Hinzufügen, Entfernen oder Umbenennen von Feldern. In der Datenverarbeitung werden Daten zu Datensätzen zusammengefasst und in Datenbanken gespeichert, sie sind Gegenstand der Verarbeitung von Computerprogrammen und werden von diesen erzeugt, gelesen, verändert und gelöscht.

Obwohl Daten eigentlich immer als Aneinanderreihung mehrerer Datenelemente auftreten, sollen hier nicht alle Erscheinungsformen von Daten einen 'Datensatz' darstellen, sondern nur Datengruppierungen, die zu einem bestimmten Objekt gehören und in Feldern organisiert sind, welche von einem DBMS gemeinsam verwaltet werden, wobei das DBMS dazu ausgebildet ist, die Datenfelder mittels vordefinierter Befehle anzulegen, zu löschen und/oder umzubenennen und ggf. auch in das Zugriffsrechtsmanagement des DBMS einzubinden. Nicht als Datensätze in diesem Sinn gelten demnach zum Beispiel: Fließtexte, Drucker- oder Video-Datenströme, Inhalte von ausführbaren Dateien, Fotodaten oder die Daten von Grafiksoftware u. a. Diese Daten können aber in einem Feld eines Datensatzes gespeichert sein.

Unter einem "Feld" wird im Folgenden ein Bereich auf einem logischen oder physikalischem Datenträger bezeichnet, der von einem DBMS verwaltet wird, der einem vordefinierten Feldtyp zugeordnet ist und der zur Speicherung eines Feldwertes eines Datensatzes angelegt und bestimmt ist. Eine "Feld" ist also ein Element zur Speicherung eines Feldwertes eines Datensatzes gemäß obiger Definition. Felder eines Datensatzes werden von einem DBMS gemeinsam verwaltet. Das Feld kann von dem DBMS mittels vordefinierter Befehle angelegt, gelöscht oder umbenannt und ggf. auch in das Zugriffsrechtsmanagement des DBMS einbezogen werden.

Ein "Feldtyp" ist eine Kategorie bzw. ein Typ, dem ein bestimmtes Feld nach Ausführungsformen angehört. Beispielsweise kann ein Feldtyp ein bestimmtes Attribut eines physischen Objektes repräsentieren. Beispielsweise kann ein DBMS zur Speicherung von Datensätzen, die Attribute von Angestellten enthalten, Feldtypen wie "Name", "Pseudonym", "Ausweisnummer"; "Zugriffszertifikat für Raum R", "Zugriffszertifikat für Gerät G", "Zugriffszertifikat für Gebäude GB", "Alter" verwenden. Jedes Feld ist dabei genau einem Feldtyp zugeordnet. Vorzugsweise darf jeder Datensatz maximal nur ein Feld für jeden im DBMS vordefinierten Feldtyp enthalten.

Ein "Feldwert" ist ein Datenwert, der Bestandteil eines Datensatzes ist und der zur Speicherung in einem Feld eines bestimmten Feldtyps bestimmt ist. Beispielsweise kann ein Feldwert des Datensatzes für einen bestimmten Angestellten "Max Mustermann" einen ersten Feldwert "Max Mustermann" für den Feldtyp "Name", einen weiteren Feldwert "13425298833" für den Feldtyp "Ausweisnummer", einen weiteren Feldwert "237971113" für den Feldtyp "Zugriffszertifikat für Raum R" beinhalten. Ein Feldwert kann aus einem einzigen Wort, einer einzigen Zahl, oder einer Kombination aus mehreren Wörtern und/oder Zahlen und/oder anderen Datenformaten bestehen, wobei verschiedene Ausführungsformen der Erfindung verschiedene Grade an Flexibilität im Hinblick auf die Art und Kombinierbarkeit von Datentypen innerhalb des gleichen Feldwertes umfassen.

Im Falle einer klassischen SQL-basierten Datenbank würde ein Feldtyp also einer Spalte einer Tabelle entsprechen, z.B. einer Spalte für "Alter" in einer "Angestelltentabelle". Jede Zeile in der Angestelltentabelle würde einem Datensatz entsprechen, welcher Attributwerte eines bestimmten Angestellten beinhaltet. Jede "Zelle" dieser Zeile entspricht einem Feld und dient der Speicherung eines Feldwertes (also eines einfachen oder zusammengesetzten Attributwerts des Angestellten). Ein Feld entspricht also dem Speicherbereich, in welchem ein bestimmter Datenwert/Feldwert eines Datensatzes gespeichert wird.

Unter einer "Datenbank" wird im Folgenden eine (typischerweise große) Menge von Daten verstanden, die in einem Computersystem von einem DBMS nach bestimmten Kriterien verwaltet wird. Die Daten sind dabei in einer Vielzahl von Datensätzen organisiert.

Ein "NoSQL" (englisch für Not only SQL) DBMS ist ein DBMS, das einem nichtrelationalen Ansatz der Datenspeicherung folgt und keine festgelegten Tabellenschemata benötigt. Zu den NoSQL DBMSs gehören insbesondere dokumentenorientierte DBMSs wie Apache Jackrabbit, BaseX, CouchDB, IBM Notes, MongoDB, Graphdatenbanken wie Neo4j, OrientDB, InfoGrid, HyperGraphDB, Core Data, DEX, AllegroGraph, und 4store, verteilte ACID- DBMSs wie MySQL Cluster, Key-Value-Datenbanken wie Chordless, Google BigTable, GT.M, InterSystems Caché, Membase, Redis, Sortierte Key-Value-Speicher, Multivalue-Datenbanken, Objektdatenbanken wie Db4o, ZODB, spaltenorientierte Datenbanken und temporale Datenbanken wie Cortex DB.

Eine "Transaktion" oder "Datenbanktransaktion" ist eine Folge zusammengehöriger Operationen (SQL-Anweisungen bei SQL-basierten relationalen DBMSs) auf der Datenbank (Lese- und Schreiboperationen, DML) für die gewisse Eigenschaften gelten sollen. Eine Transaktion führt die Datenbank von einem konsistenten Zustand in einen anderen konsistenten Zustand über. Eine Datenbank ist konsistent, wenn sie eine Menge vorgegebener logischer Bedingungen erfüllt, die Integritätsbedingungen genannt werden. Zu diesen Eigenschaften bzw. Integritätsbedingungen können insbesondere ein oder mehrere der vier ACID Kriterien gehören: 1. Atomizität (atomicity) - Ausführung entweder zur Gänze oder gar nicht. 2. Konsistenz (consistency) - Eine Transaktion führt von einem konsistenten Zustand in einen anderen konsistenten Zustand. 3. Isolation - Teilergebnisse bleiben bis zum Ende einer Transaktion für alle anderen unsichtbar. 4. Dauerhaftigkeit (durability) - Die Ergebnisse einer erfolgreich durchgeführten Transaktion bleiben erhalten.

Eine "Echtzeituhr" (englisch real-time clock, RTC) oder physikalische Uhr ist eine Uhr, welche die physikalische Zeit misst. Insbesondere kann mit dem Begriff "Echtzeituhr" eine (Hardware-)Uhr gemeint sein, welche die Uhrzeit (wie in praktisch allen modernen PCs) auch beim Ausschalten des Geräts fortschreiben.

Eine "Echtzeit" kann z.B. die Angabe von Tagen, Stunden, Sekunden und Millisekunden umfassen. Die Echtzeit kann als Systemzeit implementiert werden, die von einer Systemuhr gemessen wird, die auf einen einheitlichen, computersystemübergreifenden Zeitstandard geeicht ist. Eine Systemuhr kann z.B. als ein programmierbarer Intervallzeitgeber implementiert sein, der die CPU periodisch unterbricht und dann die Ausführung einer Zeitgeberunterbrechungsdienstroutine startet. Diese Routine fügt typischerweise einen Schritt ("tick") zur Systemuhrzeit hinzu (ein einfacher Zähler) und behandelt andere periodische Aufgaben des Datenverarbeitungssystems. Danach fährt die CPU mit der vor der Unterbrechung bearbeiteten Aufgabe fort. Beispielsweise kodieren Unix- und POSIX-kompatible Systeme die Systemzeit ("Unix-Zeit") als die seit dem Beginn der Unix-Epoche am 1. Januar 1970 00:00:00 UT verstrichenen Sekunden mit Ausnahmen für Schaltzeiten. Systeme, die die 32-Bit- und 64-Bit-Versionen der Windows-API wie Windows 9x und Windows NT implementieren, liefern die Systemzeit als SYSTEMTIME, dargestellt als Jahr / Monat / Tag / Stunde / Minute / Sekunde / Millisekunden-Wert, und FILETIME, dargestellt als Zählung der Anzahl von 100-Nanosekunden Zecken seit dem 1. Januar 1601 00:00:00 UT. Systemzeit kann in Kalenderzeit umgewandelt werden, die für menschliches Verstehen besser geeignet ist. Zum Beispiel wird die Unix-Systemzeit Zeit 1000000000 Sekunden seit Beginn der Epoche übersetzt in die Kalenderzeit 9 September 2001 01 :46:40 UT.

Ein "Datenverarbeitungssystem" ist eine Funktionseinheit zur Verarbeitung von Daten, wobei unter Verarbeitung die Durchführung mathematischer, umformender, übertragender oder speichernder Operationen auf Daten zu verstehen ist. Ein Datenverarbeitungssystem kann z.B. als Computer, Rechner, Computersystem oder ein elektronisches Bauteil mit ein oder mehreren Prozessoren ausgebildet sein. Bei den elektronischen Bauteilen kann es sich insbesondere um Komponenten von Gebäuden, Fahrzeugen oder anderen elektronischen Geräten oder Maschinen handeln, welche über einen eigenen Prozessor verfügen. Vorzugsweise hat ein elektronisches Bauteil eine Echtzeituhr oder ist operativ so an diese gekoppelt dass es Echtzeitsignale von der Uhr empfangen kann. Beispielsweise können einzelne komplexe Bauteile wie etwas Turbinen, Motoren oder Motorelementen jeweils eigenständige Datenverarbeitungssysteme darstellen oder diese beinhalten, die die Aktionen dieses elektronischen Bauteils protokollieren. Diese Protokolle sind z.B. wichtig, um Fehler erkennen und beheben zu können. Gerade in Komplexen Systemen mit mehreren Bauteilen deren Arbeitsweise von den Aktionen anderer elektronischer Bauteile abhängt kann die protokollbasierte Fehlererkennung aufwändig sein.

Ein "Tokenisierer" ist eine Programlogik, die Daten, zum Beispiel einen Feldwert, als Input erhält, die Daten analysiert, z.B. um Delimiter oder andere Zerlegungskriterien und Muster zu erkennen und die Daten dann in ein oder mehrere Token als Ergebnis der Analyse zerlegt und die Token zurückgibt. Es ist auch möglich das nicht alle Token zurückgegeben werden konnte. Beispielsweise kann ein Volltextindizierer semantisch unbedeutende Stoppwörter erkennen und herausfiltern, sodass diese nicht indiziert werden. Einen Datenwert zu "tokenisieren" bedeutet also, den Datenwert nach einem bestimmten Schema in mehrere Bestandteile zu zerteilen. Die Bestandteile stellen die Token dar. So können z.B. natürlichsprachliche Texte an vordefinierten Trennzeichen, z.B. Leerzeichen, Punkten oder Kommata, aufgeteilt werden, die so generierten Bestandteile (Wörter) werden als Token verwendet. Es ist möglich dass manche Token nicht für die Indizierung verwendet werden (z.B. Stopwörter) oder die Token vor der Indizierung zusätzlich verarbeitet werden (z.B. Reduzierung von Wörtern auf den Wortstamm). In diesem Fall erfolgt vorzugsweise eine gleichartige Verarbeitung des Suchwerts durch das Client-Computersystem oder das Server-Computersystem um sicherzustellen, dass die Suchwerte der Suchanfragen den in dem Index enthaltenen Token entsprechen.

Ein "Index" ist eine Datenstruktur, die die Suche nach bestimmten Datenwerten durch ein Datenbankmanagementsystem beschleunigt. Ein Index besteht aus einer Ansammlung von Zeigern (Verweisen), die eine Ordnungsrelation auf mehrere (in dem Index gespeicherte - "indizierte" - Datenwerte definieren. Beispielsweise werden hierfür B+-Bäume verwendet. Jeder indizierte Datenwert ist mit weiteren Zeigern verknüpft, die auf Datensätze verweisen, in welchen der gefundene indizierte Datenwert enthalten ist und die die Datenbasis für die Erstellung des Index darstellten. Datenbankmanagementsysteme verwenden Indices um als Antwort auf eine Suchanfrage die gewünschten Datensätze schnell zu identifizieren, indem zunächst der Index entlang der Zeiger nach einem Datenwert durchsucht wird welcher identisch zu einem in der Suchanfrage enthaltenen Referenzwert ist. Ohne Index müssten die von dem DBMS verwalteten Datenwerte eines Feldes sequenziell durchsucht werden, während eine Suche mit Hilfe des Index, z.B. eines B+ Baums, oft nur logarithmische Komplexität hat.

Ein "elektronisches Bauteil" ist ein durch elektrische Energie betriebenes Gerät oder Gerätekomponente. Mit Hilfe von Elektrizität können damit eine oder mehrere Aufgaben erledigt werden. Das elektronische Bauteil wird z.B. direkt vom Stromnetz mit Energie versorgt, wird als transportables Gerät mit Akkumulatoren ausgestattet oder hat Batterien. Beispielsweise kann ein elektronisches Bauteil als elektronisches Bauelement, als bestückte Leiterplatte, als elektronische Gerätekomponente oder Baugruppe ausgestaltet sein. Vorzugsweise ist das elektronische Bauteil dazu ausgebildet, allein oder mit anderen elektronischen Bauteilen eine bestimmte Funktion durchzuführen und/oder als Einheit in eine größere Baueinheit verbaut zu werden. Beispielsweise kann es sich bei dem Bauteil um einen Motor, eine Turbine, ein Treibstoffleitsystem, einen Computer, eine Lichtquelle oder dergleichen handeln.

Die Verwendung von Ordinalzahlen wie erstes, zweites, drittes etc. dient hier allein der Unterscheidung von Elementen und/oder Personen mit ansonsten gleicher Bezeichnung und soll keine bestimmte Reihenfolge implizieren. Ein "erstes Datenverarbeitungssystem" ist also ein Datenverarbeitungssystem. Ein "zweites Datenverarbeitungssystem" ist also ein Datenverarbeitungssystem. Entsprechend ist ein "erstes DBMS" ein DBMS. Ein "zweites DBMS" ist ein DBMS. Eine "erste Datenbank" ist eine Datenbank. Eine "zweite Datenbank" ist eine Datenbank.

### Kurzbeschreibung der Figuren

Ein exemplarisches Verfahren zur Erstellung eines Index sowie ein entsprechendes System sind in den anhängenden Zeichnungen 1 bis 5 veranschaulicht. Darin zeigen:
- Figur 1: ein Blockdiagramm einer Ausführungsform eines erfindungsgemäßen Datenverarbeitungssystems.
- Figur 2: zwei alternative Wege zur Erstellung einer Datensatzkopie mit einem modifizierten Feldwert.
- Figur 3: ein Flussdiagramm zur Speicherung von Datensätzen.
- Figur 4: die Erzeugung von Token aus Feldwerten und deren Zeitstempeln.
- Figur 5: ein verteiltes System mit mehreren Computern die als Datenverarbeitungssysteme fungieren.
- Figur 6: ein System mit zwei elektronischen Bauteilen, die als Datenverarbeitungssysteme fungieren.

### Ausführliche Beschreibung

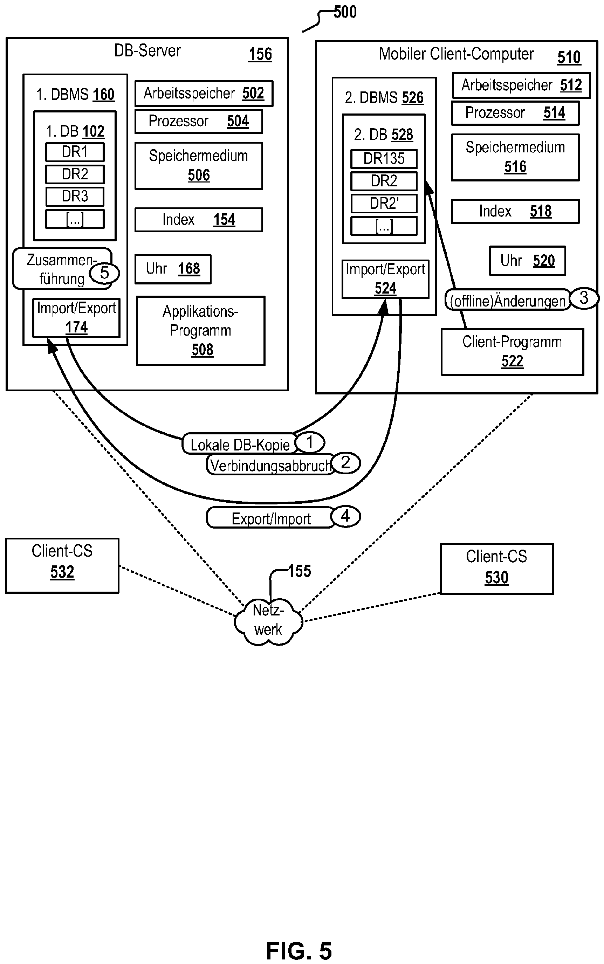

**Figur 5** zeigt ein verteiltes System 500 mit mehreren Computern 156, 510, 530, 532, die als Datenverarbeitungssysteme fungieren.

Ein erstes Datenbankmanagementsystem 156, zum Beispiel der Datenbankserver einer Firma, beinhaltet einen Arbeitsspeicher 502, ein oder mehrere Prozessoren 504, und ein nichtflüchtiges Speichermedium 506. Auf diesem Speichermedium kann ein erstes DBMS 160 und ein erstes Applikationsprogramm 508 installiert sein. Das erste Applikationsprogramm ist mit einem Clientprogramm ein oder mehrerer Client-Computer interoperabel und hat Zugriff auf die Daten eines ersten DBMS 160. Das erste DBMS, das zum Beispiel als non-SQL DBMS ausgebildet sein kann, beinhaltet eine Schnittstelle 174, die zum Import und vorzugsweise auch zum Export von Datensätzen in bzw. aus einer ersten 102, vom ersten DBMS verwalteten Datenbank dient. Außerdem beinhaltet der Datenbankserver 156 eine erste Echtzeituhr.

Der Datenbankserver 156 ist über ein Netzwerk, z.B. das Internet, mit einem oder mehreren zweiten Datenverarbeitungssystemen 510, 530, 532 verbunden. Beispielhaft werden die funktionalen Komponenten des Datenverarbeitungssystems 510 hier näher erläutert. Vorzugsweise ist auch jedes der weiteren zweiten Datenbanksysteme in funktional analoger Weise aufgebaut, enthält also auch die im Folgenden für System 510 beschriebenen Komponenten.

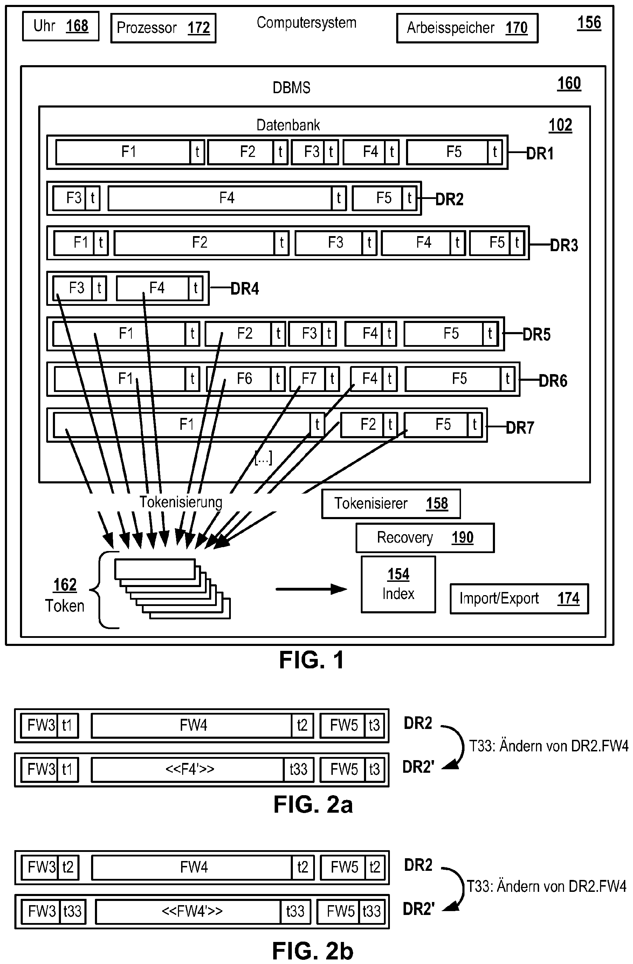

Die zweiten Datenverarbeitungssysteme können jeweils als mobile Client-Computer, z.B. Notebooks von Mitarbeitern der Firma, die den Datenbankserver 156 betreibt, ausgebildet sein. Jeder Client-Computer umfasst ebenfalls einen Arbeitsspeicher 512, ein oder mehrere Prozessoren 514, ein nichtflüchtiges Speichermedium 516, eine Echtzeituhr 520 und ein Client-Programm 522, das mit dem Applikationsprogramm 508 des Servers 156 interoperabel ist. Optional kann das Client-Computersystem auch einen Datenbankindex aus einer zweiten Datenbank 528, die von einem zweiten DBMS 526 verwaltet wird, beinhalten. Das zweite DBMS kann z.B. als no-SQL DBMS ausgestaltet sein und eine Schnittstelle 524 zum Export und vorzugsweise auch Import von Daten aus bzw. in die zweite Datenbank umfassen.
1. Beispielsweise kann ein Nutzer des Client-Computers 510, z.B. ein Außendienstmitarbeiter, sich vor dem Besuch bei einem Kunden eine lokale Kopie der zentralen Datenbank 102 herunterladen und in Form der zweiten Datenbank 529 lokal auf seinem Rechner speichern. Beispielsweise wird der Datensatz DR2 von der ersten Datenbank 102 des Datenbankservers an die zweite Datenbank 528 übertragen und dort als DR2 gespeichert.
2. Nach der Übertragung und/oder während der Erstellung und Speicherung der neuen Datensätze und Datensatzkopien kann die Netzwerkverbindung zwischen dem Client-Computer 510 und dem Datenbankserver 156 unterbrochen sein. Die Arbeit des Außendienstmitarbeiters bleibt davon unberührt da dieser auf der lokalen Kopie 528 der Datenbank arbeitet.
3. Während des Besuchs beim Kunden kann der Nutzer einzelne in der lokalen Datenbank 528 existierende Datensätze DR2 z.B. über eine GUI des Client-Programms 522 modifizieren. Im Hintergrund führt das DBMS 526 jedoch keine Änderung des existierenden Datensatzes DR2 aus, sondern erzeugt wie in Figur 2 näher beschrieben eine modifizierte Kopie DR2' des Datensatzes und speichert diese in die zweite Datenbank. Darüberhinaus können auch völlig neue Datensätze DR135 erzeugt werden. Sämtliche Feldwerte oder zumindest der modifizierte Feldwert eines neu erzeugten oder durch Kopieren erzeugten Datensatzes sind mit einem Zeitstempel verbunden, den die Echtzeituhr 520 zum Zeitpunkt der Erzeugung des Datensatzes bzw. des geänderten Feldwertes bereitstellt.
4. Das Clientprogramm stellt dann zu einem späteren Zeitpunkt, z.B. wenn der Außendienstmitarbeiter wieder in seinem Büro ist, fest, dass wieder eine Netzwerkverbindung zum Datenbankserver existiert und leitet automatisch den Export der Datensätze der zweiten Datenbank einschließlich aller neu erstellten Datensätze und Datensatzkopien über die Schnittstelle 524 und einen Import dieser Datensätze über die Schnittstelle 174 ein. Alternativ kann der Export/Import Vorgang auch manuell durch eine Nutzeraktion eingeleitet werden. Es ist auch möglich dass nur Teile der in der Datenbank 528 gespeicherten Datensätze in die erste Datenbank 102 übertragen werden, z.B. alle Datensätze mit einem jüngeren Zeitstempel als der Zeitpunkt der Übertragung der Kopie der Datensätze von der ersten 102 an die zweite 528 Datenbank in Schritt (1).
5. Schließlich erfolgt die Zusammenführung der importierten Datensätze und der Datensätze der zentralen Datenbank 102. Vorzugsweise werden vor der Zusammenführung die zu importierenden Datensätze mittels Datenbankoperationen des DBMS 160 daraufhin überprüft, ob sie konflikthaft sind, also möglicherweise logisch nicht konsistent zu den bereits in der zentralen Datenbank gespeicherten Daten sind. Beispielsweise können anhand einer effizient durchführbaren Datenbankoperation, die Datensatz-IDs bei den zu importierenden Datensätzen importiert, die noch nicht in der Datenbank gespeichert sind, die neuen Datensätze identifiziert und - da konfliktfrei - direkt in die Datenbank 102 gespeichert werden. Auch können Datensätze, die importiert werden sollen, und die jüngere Versionen von bereits in der zentralen Datenbank 102 existierenden Datensätzen darstellen, über die Zeitstempel schnell identifiziert und als konfliktfrei unmittelbar importiert werden. Allerdings kann es in manchen Ausführungsformen der Erfindung zu einem Konflikt kommen wenn ein Datensatz DR2', der in der Datenbank 528 erstellt wurde, in die zentrale Datenbank 102 importiert werden soll, obwohl dort mittlerweile eine weitere Kopie DR2" des selben Datensatzes erstellt wurde, der noch jünger ist als der zu importierende Datensatz DR2'. In diesem Fall kann der Import des DR2' Datensatzes abgebrochen werden oder eine Applikationslogik 508 modifiziert die zu importierenden Datensätze so, dass ein Konflikt bzw. eine logische Inkonsistenz der Datensätze DR2" und DR2' vermieden wird.

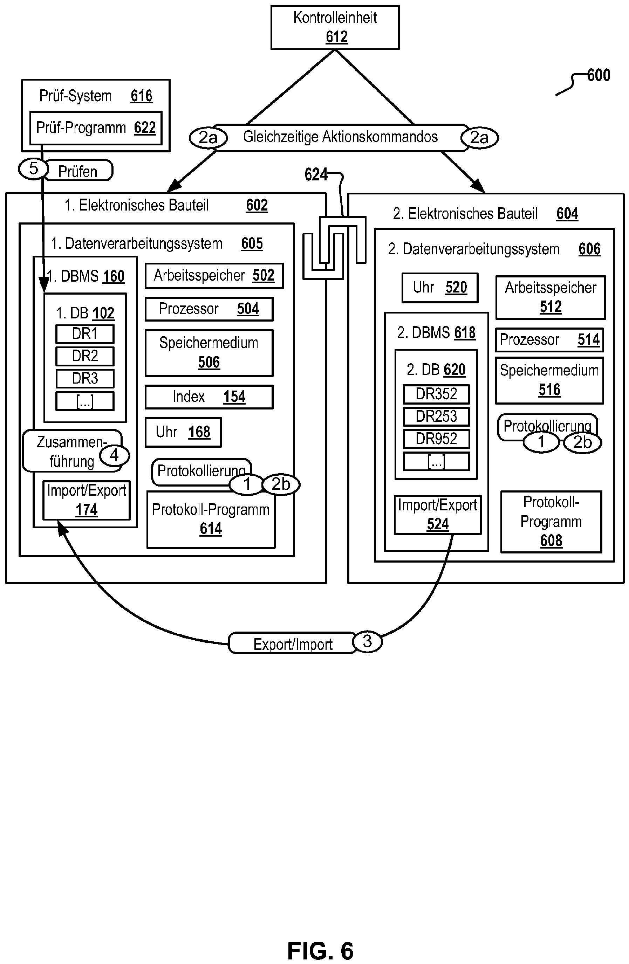

**Figur 6** zeigt ein System 600 gemäß einer alternativen Ausführungsform der Erfindung. Das System 600 beinhaltet zwei elektronische Bauteile 602, 604, die als Datenverarbeitungssysteme fungieren. Beispielsweise kann es sich beim ersten elektronischen Bauteil 602 um Kerosin-Zuleitungs- und Kontrollsystem, im Folgenden kurz "Treibstoffsystem", handeln, das Kerosin an mehrere Turbinen eines Flugzeugs verteilt, und bei dem zweiten elektronischen Bauteil 604 um eine Turbine eines Flugzeugs. Das System kann ein Prüfsystem 616, z.B. einen Prüf-Computer, umfassen, auf dem ein Prüfprogramm 622 instanziiert ist, und das zur Prüfung verwendet werden kann, ob ein Protokoll eines gemeinsamen Funktionstests des Treibstoffsystems und der Turbine auch wirklich authentisch ein Prüfszenario betrifft, bei dem eben diese Turbine (und keine andere) und eben dieses Treibstoffsystem (und kein Anderes) gemeinsam getestet bzw. betrieben wurden, und dies, obwohl die beiden Bauteile ihre Aktionen jeweils unabhängig von anderen elektronischen Bauteilen protokollieren.

Das System 600 umfasst eine Kontrolleinheit 612, z.B. ein Steuerungsmodul oder einen Steuerungscomputer, die dazu ausgebildet ist ein Aktionskommando gleichzeitig an zwei oder mehr elektronische Bauteile 602, 604 zu senden um diese jeweils zur Durchführung einer Aktion zu veranlassen.
1. Der Funktionstest beginnt damit, dass das Treibstoffsystem 602 und die Turbine 604 gemeinsam betrieben werden, z.B. im Zuge eines Testflugs. Dabei können Turbine und Treibstoffsystem von unterschiedlichen Herstellern kommen und keine Schnittstelle zum Erstellen eines gemeinsamen Protokolls besitzen. Vielmehr protokolliert jedes elektronische Bauteil die eigenen Aktionen eigenständig mit, indem es jede eigene Aktion in Form eines Datensatzes in eine interne Datenbank schreibt.
   Beispielsweise verfügt das Treibstoffsystem 602 über ein erstes Datenverarbeitungssystem 605 oder stellt selbst ein solches dar. Das erste Datenverarbeitungssystem beinhaltet einen Arbeitsspeicher 502, ein oder mehrere Prozessoren 504, einem nichtflüchtigen Speichermedium 506, eine erste Echtzeituhr 168, optional einen Datenbankindex einer ersten Datenbank 102 und ein Protokollprogramm 614. Das nichtflüchtige Speichermedium beinhaltet ein DBMS 160, das die Protokolldatenbank 102 verwaltet. Das Protokollprogramm protokolliert die von dem Treibstoffsystem durchgeführten Aktionen, z.B. das Zuleiten von Kerosin in ein oder mehrere Turbinen, das Drosseln oder Erhöhen der Kerosinzufuhr, etc., indem es Datensätze in die Datenbank 102 speichert, die wichtige Parameterwerte in Form von Feldwerten beinhalten. Jeder der Feldwerte ist dabei verknüpft mit einem von der Echtzeituhr 168 des Treibstoffsystems bereitgestellten Zeitpunkts, wann die Aktion von dem Treibstoffsystem durchgeführt bzw. der Parameter erfasst wurde.
   Beispielsweise verfügt die Turbine 604 über ein zweites Datenverarbeitungssystem 606 oder stellt selbst ein solches dar. Das zweite Datenverarbeitungssystem beinhaltet einen Arbeitsspeicher 512, ein oder mehrere Prozessoren 514, einem nichtflüchtigen Speichermedium 516, eine zweite Echtzeituhr 520, optional einen Datenbankindex einer zweiten Datenbank 620 und ein Protokollprogramm 608. Das nichtflüchtige Speichermedium beinhaltet ein DBMS 618, das die Protokolldatenbank 620 verwaltet. Das Protokollprogramm 608 protokolliert die von der Turbine 604 durchgeführten Aktionen, z.B. die Beschleunigung der Rotoren, das Messen der Rotationsgeschwindigkeit, eine Neuausrichtung der Turbine, etc., indem es Datensätze in die Datenbank 620 speichert, die wichtige Parameterwerte in Form von Feldwerten beinhalten. Jeder der Feldwerte ist dabei verknüpft mit einem von der Echtzeituhr 520 des Treibstoffsystems bereitgestellten Zeitpunkts, wann die Aktion von dem Treibstoffsystem durchgeführt bzw. der Parameter erfasst wurde.
   Sowohl ein erstes Aktions-Protokoll in Form der ersten Datenbank 102 als auch ein zweites Aktions-Protokoll in Form der zweiten Datenbank 620 werden also unabhängig voneinander erstellt. Sie können z.B. auch Fehlermeldungen oder sonstige Angaben enthalten, anhand welcher auf mögliche Fehlfunktionen geschlossen werden kann. Jedes der beiden Protokolle gibt also Teilaspekte einer Interaktion 624 der beiden elektronischen Bauteile wieder.
   Es besteht die Gefahr, dass bei einer Prüfung einer "Gesamtschau" beider Protokolle aus Versehen oder absichtlich das Protokoll einer Turbine mit dem Treibstoffsystemprotokoll kombiniert wird, die nie in der Praxis zusammen mit diesem Treibstoffsystem getestet wurde.
2. (a) In diesem Schritt sendet die Kontrolleinheit ein Aktionskommando gleichzeitig jeweils an eines der beiden Bauteile, um diese jeweils zur Durchführung einer bekannten Operation zu veranlassen. Beispielsweise kann es sich um ein Kommando zum Erhöhen der Beschleunigung handeln, wobei dieses Kommando aufgeteilt werden kann in ein Teil-Kommando an das Treibstoffsystem zur Erhöhung der Kerosinzufuhr und ein Teilkommando zur Erhöhung der Drehzahl an die Turbine 604. Während des Tests können mehrere Solcher Kommandos gegeben werden.
2. (b) Auch der Empfang des Aktionskommandos wird je durch beide elektronischen Bauteile protokolliert, wobei der Zeitstempel der aktuellen Echtzeit mit den Feldwerten des jeweils neu erstellten Protokolldatensatzes des Aktionskommandos verknüpft gespeichert ist.
3. Es können nun weitere Aktionen und Parameter je durch die Protokollprogramme beider elektronischer Bauteile protokolliert werden. Zu einem bestimmten Zeitpunkt, z.B. nach Abschluss des Funktionstests, werden die protokollierten Aktionen der Turbine über die Schnittstelle 524 exportiert und in die erste Datenbank importiert.
4. Schließlich werden die unabhängig voneinander erstellten Protokolle der Aktionen der jeweiligen elektronischen Bauteile in der ersten Datenbank 102 zusammengeführt. Ein Herausfiltern von konflikthaften Datensätzen kann hier vorzugsweise unterbleiben, da die zusammengeführten Datensätze die Aktionen unterschiedlicher Bauteile betreffen und insofern sich nicht widersprechen können. Die Echtzeituhrbasierten Zeitstempel ermöglichen jedoch die Erzeugung eines gemeinsamen Interaktionsprotokolls in Form der um die importierten Datensätze ergänzten ersten Datenbank.
5. Durch Analyse der Zeitstempel der Datensätze des gemeinsamen Interaktionsprotokolls, insbesondere der Datensätze die die Aktionen protokolierten, die als Antwort auf das gleichzeitig empfangene Aktionskommando ausgeführt wurden, kann das Prüfprogramm 622 verifizieren, dass die beiden elektronischen Bauteile wirklich miteinander interagierten bzw. gemeinsam getestet wurden, denn nur in diesem Fall haben Datensätze der beiden Protokolldatenbanken 102, 620, die Protokolleinträge repräsentieren, die vom gleichen Aktionskommando induziert wurden, auch gleiche oder fast gleiche Zeitstempel.

**Figur 1** zeigt ein Blockdiagramm einer Ausführungsform eines erfindungsgemäßen Datenverarbeitungssystems 156. Das Datenverarbeitungssystem kann zum Beispiel als Computersystem, zum Beispiel ein Datenbankserver oder ein Client Computersystem, ausgebildet sein (Figur 5). Alternativ dazu kann das Computersystem 156 aber auch als elektronisches Bauteil ausgebildet sein bzw. ein Bestandteil eines elektronischen Bauteils sein (Figur 6).

Das Datenverarbeitungssystem 156 beinhaltet einen Arbeitsspeicher 170, ein oder mehrere Prozessoren 172 und eine Echtzeituhr 168. Es hat einen nichtflüchtigen Speicher, auf welchem ein Datenbankmanagementsystem (DBMS) gespeichert ist. Das DBMS 160 beinhaltet und verwaltet eine Datenbank 102, welche mehrere Datensätze DR1-DR7 umfasst. Jeder Datensatz beinhaltet ein oder mehrere Feldwerte, die je bestimmten Feldtypen F1-F7 zugeordnet sind. Jedem Feldwert ist außerdem ein Zeitstempel "t" zugeordnet, der einen Echtzeit Wert angibt, den das DBMS 160 von der Echtzeituhr 168 empfangen hat. Feldwerte sind einfache oder zusammengesetzte Datenwerte, zum Beispiel Zahlen, Wörter, Buchstaben, Bilder, oder Kombinationen von mehreren dieser Datentypen. Die Felder können ein bestimmtes, DBMS spezifisches Datenformat haben (zum Beispiel INTEGER, VARCHAR, etc.) oder ein generisches Datenformat haben.

Das Datenverarbeitungssystem 156 verfügt über eine Tokenisierungsapplikation 158 ("Tokenisierer", "Tokenisierungslogik"), die dazu ausgebildet ist, aus jedem der Feldwerte der Datensätze und der diesem zugeordneten Zeitstempeln eine Vielzahl von Token 162 zu erzeugen und diese in einem durchsuchbaren Index 154 zu speichern. Die Tokenisierungslogik kann so ausgebildet sein, dass selektiv nur Datensätze indiziert werden, deren Zeitstempel sämtlich vor und oder nach vordefinierten zeitlichen Grenzen liegt. Durch die Verwendung des Index 154 als Suchindex kann also festgelegt werden, welchen zeitlichen Bereich bzw. welchen zeitlich bedingten Zustand des Inhalts einer Datenbank eine Antwort auf eine Suchanfrage innerhalb der Datenbank 102 abdecken wird.

Beispielsweise ist das erste Feld von Datensatz DR1 dem Feldtyp F1 zugewiesen, das zweite Feld von Datensatz DR1 dem Feldtyp F2 usw. In analoger Weise ist das erste Feld von Datensatz DR6 dem Feldtyp F1 zugewiesen, das zweite Feld von Datensatz DR6 dem Feldtyp F6 usw. Die Zusammensetzung der Feldwerte der einzelnen Datensätze kann sich dabei im Hinblick auf deren Feldtypen unterscheiden, wie anhand der Datensätze in der Datenbank 102 ersichtlich ist. Es ist auch möglich, dass einzelne Datensätze gar keinen Feldwert eines bestimmten Feldtyps beinhalten.

Nach alternativen Ausführungsformen wird die Programmlogik zur Tokenisierung und/oder zur Generierung des Index in Form eines Plug-ins oder Add-ons des DBMS bereitgestellt. Dies kann vorteilhaft sein, da mithilfe eines zusätzlichen Softwaremoduls zur Tokenisierung und Tokenklassifikation bestehende Typen von DBMSs funktional erweitert werden können, sodass eine Migration der Daten zu einem anderen DBMS zum Zwecke der Tokengenerierung und Klassifikation nicht notwendig ist. Nach einer weiteren, hier nicht dargestellten alternativen Ausführungsform können Tokenisierung und Indexerzeugung je in Forme eines eigenständigen Applikationsprogramms implementiert sein.

Vorzugsweise werden sämtliche oder zumindest die meisten Feldwerte sämtlicher Datensätze einer Datenbank 102 tokenisiert, sodass eine große Menge an Token 162 entsteht. In Abhängigkeit von der Art der Daten in den einzelnen Feldwerten können die Token 162 eine Mischung aus Zahlen, Buchstabenwörtern, Bildern oder Bildsegmenten, Audiodateien oder Audioelementen oder sonstigen Datenstrukturen beinhalten. Jedes der erzeugten Token ist mit einem Zeiger verknüpft gespeichert, wobei der Zeiger auf den Datensatz verweist, ihm das Token entstammt, nicht jedoch auf ein einzelnes Feld bzw. einen Feldtyp verweist, in welchem der Feldwert gespeichert wurde aus welchem der Token abgeleitet wurde.

Vorzugsweise erfolgt die Speicherung aller Token in dem Index so, dass die Token nach einem Sortierkriterium sortiert werden und in sortierter Form in der Indexstruktur gespeichert werden. Die Sortierung kann beispielsweise anhand des Alphabets für alphanumerische Daten oder sonstiger, an die Daten angepasste Sortierkriterien erfolgen. Da die Token in dem Index vorzugsweise in sortierter Form gespeichert sind, und weiterhin vorzugsweise in einer Baumstruktur gespeichert sind, ist es sehr schnell möglich, ein bestimmtes Token innerhalb des Index zu identifizieren und dann die Verweise dieses identifizierten Tokens auf ein oder mehrere Datensätze zu verwenden, um sehr schnell diejenigen Datensätze zu identifizieren, die ein bestimmtes, gesuchtes Token enthalten. Es ist also nicht erforderlich, die Datensätze der Datenbank 102 sequenziell zu durchsuchen.

Außerdem kann in Ausführungsformen das Computersystem 156 ein RecoveryModul ("Recovery-Programm") beinhalten, dass dazu ausgebildet ist, die Datenbank 102 auf einen definierten Zustand der Vergangenheit zurückzusetzen. Das Modul 190 kann auch Bestandteil des DBMS 160 sein. Beispielsweise kann es Datenbankabfragen dynamisch so modifizieren, dass diese nur auf Datensätze gerichtet sind, deren Zeitstempel anzeigt, dass diese vor einem bestimmten Zeitpunkt erstellt wurden. Alternativ dazu kann das Modul 190, das in diesem Fall auch Bestandteil der Programmlogik 158 zur Indexerstellung sein kann, den Suchindex zu erstellen, dass diese selektiv nur Token von Datensätzen beinhaltet, deren Zeitstempel anzeigt, dass diese vor einem bestimmten Zeitpunkt erstellt wurden.

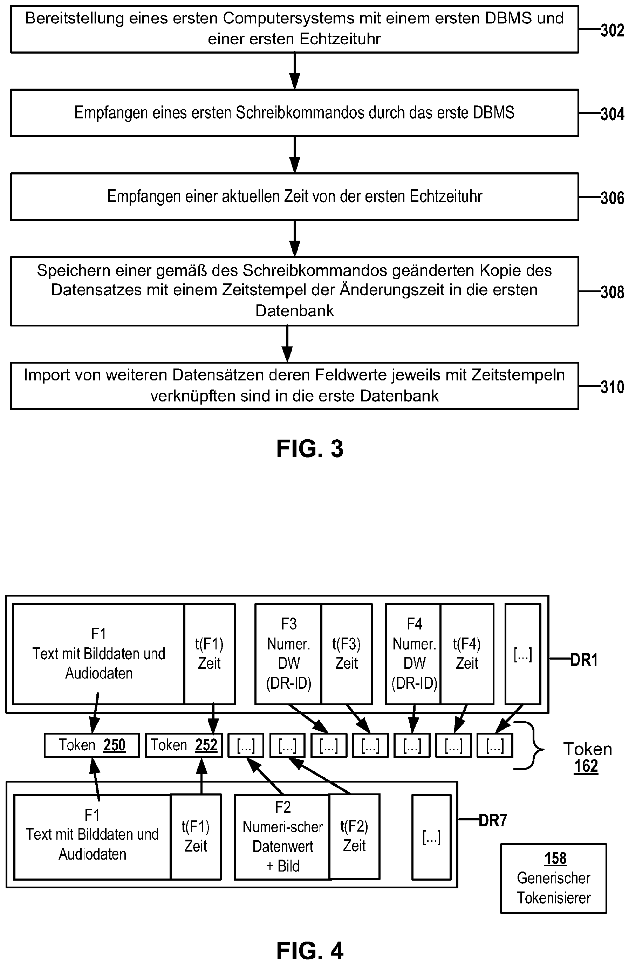

**Figur 2** zwei alternative Wege zur Erstellung einer Datensatzkopie mit einem modifizierten Feldwert. **Figur 3** zeigt ein Flussdiagramm zur Speicherung von Datensätzen. Im Folgenden sollen die in Figuren 2 und 3 repräsentierten Ausführungsformen gemeinsam beschrieben werden.

In einem ersten Schritt 302 wird ein erstes Datenverarbeitungssystem 156, zum Beispiel ein Datenbankserver, bereitgestellt. Ein solches Datenverarbeitungssystem ist beispielhaft in Figur 1 - 156 gezeigt. Das erste Datenverarbeitungssystem beinhaltet ein erstes DBMS 160 und eine erste Echtzeituhr 168. Das erste DBMS beinhaltet eine erste Datenbank 102, zum Beispiel eine Aktionsprotokolldatenbank eines elektronischen Bauteils oder eine zentrale Datenbank einer Firma. Diese Datenbank beinhaltet eine Vielzahl von Datensätzen, die jeweils mehrere Feldwerte beinhalten. Jedem der Feldwerte ist ein Zeitstempel zugeordnet, der mit dem Feldwert verknüpft als Bestandteil des Datensatzes gespeichert ist. Figur 2 zeigt beispielhaft die in verschiedenen Feldern eines Datensatzes DR2 gespeicherten Feldwerte FW3, FW4, FW5 sowie die mit diesen verknüpft gespeicherten Zeitstempel. So kann beispielsweise der Feldtyp F2 zur Speicherung einer gemessenen Temperatur dienen. Feldtyp F3 kann zur Speicherung einer Flüssigtreibstoff-Zuflussrate dienen. Feldtyp F5 kann zur Speicherung des Status eines Zuflusskanals für Treibstoff dienen.

In Schritt 304 empfängt das erste DBMS 160 ein Schreibkommando zum Ändern eines der Feldwerte eines der Datensätze. Beispielsweise kann sich das Schreibkommando auf den Feldwert FW4 des Datensatzes DR2 beziehen.

Als Antwort auf den Empfang des ersten Schreibkommandos empfängt das Datenbanksystem 160 in Schritt 306 eine aktuelle Zeit von der ersten Echtzeituhr 168. Die empfangene aktuelle Zeit gibt damit den Zeitpunkt des Empfangs des Schreibkommandos an, was hier auch (näherungsweise) dem Zeitpunkt der Speicherung einer geänderten Kopie (Version) DR2' des Datensatzes DR2 entspricht. Obwohl das Schreibkommando sich also auf einen existierenden Datensatz bezog, wurde dieser unverändert in der Datenbank 102 belassen und stattdessen eine geänderte Kopie erstellt.

Die geänderte Kopie DR2' wird in Schritt 308 in der Datenbank 102 gespeichert. Die Kopie beinhaltet einen Feldwert «FW4`», der gemäß den Angaben in dem Schreibkommando geändert wurde. Falls also beispielsweise ein Sensor eines Treibstoffsystems einen aktuellen Wert für eine Flüssigtreibstoff-Zuflussrate messtechnisch bestimmt und das erste DBMS ein Schreibkommando zum Überschreiben des alten Flüssigtreibstoff-Zuflussraten-Feldwerts bekommt, legt das DBMS stattdessen einen neuen Datensatz DR2' an, der sich nicht nur im Hinblick auf den Feldwert für die Flüssigtreibstoff-Zuflussrate, sondern auch im Hinblick auf mindestens einen Zeitstempel von dem ursprünglichen Datensatz unterscheidet.

Je nach Betriebsmodus des DBMS oder je nach Implementierung des DBMS 160 kann die Erzeugung der Datensatzkopie entweder nach Figur 2a oder nach Figur 2b erfolgen. Bei der Erzeugung der Datensatzkopie gemäß Figur 2A werden die Feldwerte FW 3, FW5 und die diesen zugeordneten Zeitstempel t1, t3 unverändert als Bestandteil der Datensatzkopie übernommen. Die Kopie DR2' des Datensatzes unterscheidet sich vom Original DR2 also nur im Hinblick auf den zu ändernden Feldwert FW4 und dessen Zeitstempel (t33 vs t2) an. Der Zeitstempel t33 gibt dabei den Zeitpunkt des Empfangs des Schreibkommandos bzw. Darstellung der Datensatzkopie an. Der Zeitstempel t2 hingegen repräsentierte den Zeitpunkt der Erstellung des ursprünglichen Feldwerts FW4.

Gemäß der alternativen Ausführungsform bzw. alternativen Konfiguration des DBMS 160 werden sämtliche Zeitstempel aller Feldwerte der Datensatzkopie DR2' auf den Zeitpunkt t33 des Empfangs des Schreibkommandos bzw. der Erzeugung der Datensatzkopie festgelegt.

Das DBMS 160 besitzt eine Schnittstelle 174 zum Import von weiteren Datensätzen, die jeweils aus mehreren Feldwerten und den mit diesen verknüpften Zeitstempeln bestehen, in die erste Datenbank 102. Die Importschnittstelle kann allein oder in Interoperation mit einem Applikationsprogramme 508 (Figur 5) diejenigen der zu importierender Datensätze identifizieren, die konfliktfrei sind, zum Beispiel weil sie völlig neu erstellt wurden und nicht eine neue Version eines bereits in der Datenbank 102 vorhandenen Datensatzes darstellen. Falls im Zuge der Analyse konfliktbehaftete Datensätze identifiziert werden, werden diese entweder herausgefiltert oder durch ein Applikationsprogramm so modifiziert, dass sie konfliktfrei in die erste Datenbank 102 importiert werden können.

**Figur 4** zeigt die Erzeugung von Token 162 aus Feldwerten und deren Zeitstempeln. Die Feldwerte der unterschiedlichen Feldtypen S1, S3, S4 können dabei unterschiedliche Datenformate haben, oder ein generisches, gemeinsames Datenformat, in dem Daten unterschiedlichen Formats gespeichert werden können, zum Beispiel Texte, Bilder, Audiodaten, Zertifikate, biometrische Daten, und andere. Einvorzugsweise generischer-Tokenisierer 158 zerlegt jede der Feldwerte in ein oder mehrere Token 250, 252. Auch die Zeitstempel der Feldwerte werden jeweils als Token behandelt. Die Gesamtheit der so erhaltenen Token 250, 252 bildet die Tokenmenge 162, die die Ausgangsbasis für die Erstellung des Suchindex 154 darstellt.

### Bezugszeichenliste

- DR1-DR952: Datensätze
- F1-F7: Typen von Datenfeldern
- t1-t33: Zeitstempel
- 102: Datenbank
- 154: Index
- 155: Netzwerk
- 156: erstes Datenverarbeitungssystem
- 158: Tokenisierungslogik
- 160: erstes DBMS
- 162: Tokenmenge
- 168: erste Echtzeituhr
- 170: Arbeitsspeicher
- 172: Prozessor(en)
- 174: Importschnittstelle
- 190: Recoverymodul
- 302-310: Schritte
- 500: verteiltes Computersystem
- 502: Arbeitsspeicher
- 504: Prozessor(en)
- 506: Speichermedium (506)
- 508: Applikationsprogramm
- 510: zweites Datenverarbeitungssystem
- 512: Arbeitsspeicher
- 514: Prozessor(en)
- 516: Speichermedium
- 518: Index der zweiten Datenbank
- 520: zweite Echtzeituhr
- 522: Client-Programm
- 530: Client-Computersystem (2tes Computersystem)
- 532: Client-Computersystem (2tes Computersystem)
- 600: elektronisches Prüfsystem
- 602: erstes elektronisches Bauteil
- 604: zweites elektronisches Bauteil
- 605: erstes Datenverarbeitungssystem
- 606: zweites Datenverarbeitungssystem
- 608: Protokollprogramm
- 612: Kontrolleinheit
- 614: Protokollprogramm
- 616: Prüfsystem
- 618: zweites Datenbankmanagementsystem
- 620: zweite Datenbank
- 622: Prüfprogramm

## Patentansprüche

1. Ein erstes Datenverarbeitungssystem (156) mit einem ersten DBMS (160) und einer ersten Echtzeituhr (168), wobei das erste DBMS umfasst:
- eine erste Datenbank (102) mit einer Vielzahl von Datensätzen (DR1-DR7), wobei die Datensätze jeweils mehrere Feldwerte beinhalten, wobei jeder der Feldwerte mit einem Zeitstempel (t1, t2, t3, t33) verknüpft gespeichert ist;
wobei das erste DBMS konfiguriert ist zum:
- Empfangen (304) eines ersten Schreibkommandos zum Ändern eines Feldwerts eines der Datensätze der ersten Datenbank;
- Als Antwort auf den Empfang des ersten Schreibkommandos:
o Empfangen (306) einer aktuellen Zeit von der ersten Echtzeituhr;
o Speichern (308) einer Kopie des Datensatzes, dessen Feldwert durch das Schreibkommando geändert werden soll, in die ersten Datenbank, wobei die Datensatzkopie einen gemäß dem ersten Schreibkommando geänderten Feldwert anstatt des bisherigen Feldwerts aufweist, wobei der geänderte Feldwert mit einem Zeitstempel, der die von der ersten Echtzeituhr empfangene aktuelle Zeit angibt, verknüpft gespeichert ist, wobei ein oder mehrere der anderen Feldwerte der Datensatzkopie jeweils mit einem Zeitstempel verknüpft gespeichert sind, der eine andere Zeit angibt, oder wobei alle anderen Feldwerte der Datensatzkopie jeweils mit einem Zeitstempel, der die von der ersten Echtzeituhr bestimmte Zeit angibt, verknüpft gespeichert sind;
- wobei das erste DBMS eine Importschnittstelle (174) beinhaltet, die zum Import (310) von weiteren Datensätzen, die jeweils aus mehreren Feldwerten und mit den Feldwerten verknüpften Zeitstempeln bestehen, in die erste Datenbank ausgebildet ist; und
- wobei das erste DBMS so konfiguriert ist, dass es die Durchführung von Schreibkommandos nicht protokolliert oder nur in einem so reduzierten Umfang protokolliert, dass eine Rekonstruktion des Inhalts der ersten Datenbank zu einem bestimmten Zeitpunkt anhand der Logdaten des ersten DBMS nicht möglich ist; und
- wobei das erste DBMS konfiguriert ist zum:
- Empfang eines Rücksetzungskommandos bezüglich der ersten Datenbank, wobei das Rücksetzungskommando einen Zeitpunkt in der Vergangenheit spezifiziert, auf welchen der Inhalt der ersten Datenbank zurückgesetzt werden soll;
- als Antwort auf den Empfang des Rücksetzungskommandos, Erstellen eines neuen Datenbankindex, wobei die Erstellung umfasst:
o Identifikation aller Datensätze in der ersten Datenbank, deren Feldwert-assoziierte Zeitstempel alle älter sind als der im Rücksetzungskommando spezifizierte Zeitpunkt;
o Tokenisierung der Feldwerte selektiv nur der identifizierten Datensätze;
o Speichern von durch die Tokenisierung der identifizierten Datensätze erzeugten Token in einem durchsuchbaren Datenbankindex;
o Verwenden des durchsuchbaren Datenbankindex anstatt eines bisher verwendeten Datenbankindex der ersten Datenbank bei der Bearbeitung von Lesekommandos.

2. Das erste Datenverarbeitungssystem nach Anspruch 1, wobei die Importschnittstelle konfiguriert ist zum:
o Identifikation derjenigen der weiteren Datensätze, welche konfliktfrei sind, wobei die konfliktfreien weiteren Datensätze beinhalten:
▪ Datensätze, die einen neuen Datensatz und nicht eine geänderte Kopie eines in der ersten Datenbank existierenden Datensatzes darstellen; oder
▪ Datensätze, die eine geänderte Kopie eines der Datensätze der ersten Datenbank darstellen, wobei die geänderte Kopie ausschließlich Feldwerte beinhaltet, deren Zeitstempel sämtlich gleichalt oder jünger sind als eine Referenzzeit;
o Speichern selektiv der identifizierten konfliktfreien weiteren Datensätze in die erste Datenbank,
o zeitweises oder permanentes Unterbinden der Speicherung aller übrigen der weiteren Datensätze in die erste Datenbank.

3. Das erste Datenverarbeitungssystem nach einem der vorigen Ansprüche, wobei das zweitweise oder permanentes Unterbinden der Speicherung umfasst:
- Bereitstellen der übrigen der weiteren Datensätze an ein Applikationsprogramm, welches Zugriff auf die erste Datenbank hat und dazu konfiguriert ist, Konflikte zwischen den übrigen weiteren Datensätzen und den bereits in der ersten Datenbank gespeicherten Datensätzen durch Modifikation oder Filterung der übrigen weiteren Datensätze aufzulösen; und Speicherung der modifizierten und/oder gefilterten übrigen Datensätze in der ersten Datenbank; oder
- Löschen der übrigen weiteren Datensätze ohne diese in die erste Datenbank zu speichern.

4. Das erste Datenverarbeitungssystem nach einem der vorigen Ansprüche, wobei das erste DBMS so konfiguriert ist, dass es
- während des Speicherns der Datensatzkopie in der ersten Datenbank ein paralleles Erstellen und Speichern weiterer Kopien des kopierten Datensatzes erlaubt; und/oder
- eine Überprüfung der logischen Konsistenz des geänderten Feldwerts mit dem Inhalt der schon in der ersten Datenbank existierenden Datensätze für das Speichern der Datensatzkopie in die erste Datenbank unterlässt.

5. Das erste Datenverarbeitungssystem nach einem der vorigen Ansprüche, wobei das erste DBMS das Schreiben der Datenbankkopie in die erste Datenbank durchführt ohne den Schreibzugriff in eine Datenbanktransaktion einzubetten, die die Wahrung der Datenkonsistenz der geschriebenen Datensatzkopie mit den existierenden Datensätzen garantiert.

6. Das erste Datenverarbeitungssystem nach einem der vorigen Ansprüche, wobei das erste DBMS dazu konfiguriert ist, regelmäßig und automatisch einen Datenbankindex zu erstellen, wobei die Erstellung jeweils umfasst:
- Tokenisierung der Feldwerte der in der ersten Datenbank gespeicherten Datensätze;
- Speichern von durch die Tokenisierung erzeugten Token in einem durchsuchbaren Datenbankindex;
- Speichern eines von der ersten Echtzeituhr zum Zeitpunkt der Indexerstellung bestimmten Zeitpunkts in Verbindung mit dem erstellten Datenbankindex;
wobei das erste DBMS konfiguriert ist zum:
- Empfangen eines ersten Lesekommandos zum Lesen von in der ersten Datenbank gespeicherten Datensätzen;
- Als Antwort auf den Empfang des Lesekommandos, Durchsuchen des Datenbankindex nach Datensätzen, die einen in dem Lesekommando spezifizierten Suchwert beinhalten.

7. Ein verteiltes Computersystem (500), welches das erste Datenverarbeitungssystem nach einem der vorigen Ansprüche in Form eines ersten Computersystems und ein zweites Datenverarbeitungssystem (510) in Form eines zweiten Computersystems umfasst, wobei das zweite Datenverarbeitungssystem ein zweites DBMS (526) und eine zweite Echtzeituhr (520) beinhaltet, wobei das zweite DBMS umfasst:
- eine zweite Datenbank (528) mit einer Vielzahl von Datensätzen (DR135, DR2', DR3`), wobei diese Datensätze jeweils mehrere Feldwerte beinhalten, wobei jeder der Feldwerte mit einem Zeitstempel verknüpft gespeichert ist;
wobei das zweite DBMS konfiguriert ist zum:
- Empfangen eines zweiten Schreibkommandos zum Ändern eines Feldwerts eines der Datensätze der zweiten Datenbank;
- Als Antwort auf den Empfang des zweiten Schreibkommandos:
o Empfangen einer aktuellen Zeit von der zweiten Echtzeituhr;
o Speichern einer Kopie des Datensatzes, dessen Feldwert durch das Schreibkommando geändert werden soll, in die zweite Datenbank, wobei die Datensatzkopie in der zweiten Datenbank einen gemäß des zweiten Schreibkommandos geänderten Feldwert anstatt des bisherigen Feldwerts aufweist, wobei der geänderte Feldwert mit einem Zeitstempel, der die bestimmte aktuelle Zeit angibt, verknüpft gespeichert ist, wobei alle anderen Feldwerte der Datensatzkopie mit dem gleichen Zeitstempel verknüpft sind wie der jeweils ursprüngliche Feldwert oder wobei alle anderen Feldwerte der Datensatzkopie mit dem Zeitstempel, der die bestimmte aktuelle Zeit angibt, verknüpft gespeichert sind;
wobei das zweite DBMS eine Exportschnittstelle (524) zum Export von Datensätzen der zweiten Datenbank einschließlich deren Zeitstempeln beinhaltet, um die exportierten Datensätze als die weiteren Datensätze der Importschnittstelle des ersten DBMS zur Verfügung zu stellen.

8. Das verteilte Computersystem nach Anspruch 8, wobei das erst und zweite DBMS so konfiguriert sind, dass neue Datensätze oder geänderte Kopien von vorhandenen Datensätzen jeweils in der ersten Datenbank und in der zweiten Datenbank unabhängig voneinander erstellt werden.

9. Das verteilte Computersystem nach Anspruch 8 oder 9, wobei das erste Datenverarbeitungssystem ein Datenbankserver ist und wobei das zweite Datenverarbeitungssystem ein mobiles Computersystem ist, wobei der Inhalt der zweiten Datenbank eine vollständige oder teilweise Kopie der Datensätze der ersten Datenbank ist.

10. Das verteilte Computersystem nach einem der Ansprüche 8-10, wobei das zweite DBMS mit dem ersten Datenverarbeitungssystem über eine Netzwerkverbindung verbunden sind, über welche eine Replikation von Datensätzen von der ersten zur zweiten Datenbank und/oder von der zweiten zu der ersten Datenbank erfolgt, wobei die Netzwerkverbindung wiederholt unterbrochen ist und das erste und zweite DBMS so konfiguriert sind, dass auch während der Unterbrechung neue Datensätze oder geänderte Kopien von vorhandenen Datensätzen jeweils in der ersten Datenbank und in der zweiten Datenbank unabhängig voneinander erstellt werden können.

11. Das verteilte Computersystem nach einem der Ansprüche 8-11, wobei das zweite DBMS so konfiguriert ist, dass es automatisch feststellt, ob eine Netzwerkverbindung zum ersten DBMS besteht und, falls die Netzwerkverbindung besteht, Datensätzen der zweiten Datenbank einschließlich deren Zeitstempeln über die Exportschnittstelle exportiert, über das Netzwerk an das erste DBMS überträgt und das erste DBMS die exportierten Datensätze über seine Importschnittstelle importiert.

12. Das verteilte Computersystem nach einem der Ansprüche 8-12, wobei das System ein oder mehrere weitere zweite Datenverarbeitungssysteme beinhaltet, die jeweils die in den Ansprüchen 8-12 für das zweite Datenverarbeitungssystem spezifizierten Eigenschaften aufweisen.

13. Ein elektronisches System (600) zur Prüfung der Vertrauenswürdigkeit eines Protokolls der Interaktion eines ersten und eines zweiten elektronischen Bauteils, wobei das elektronische System umfasst:
- das erste elektronisches Bauteil (602),
- das zweite elektronisches Bauteil (604),
- eine Kontrolleinheit (612) zur gleichzeitigen Ausgabe eines aktionsauslösenden Kommandos an das erste und zweite elektronische Bauteil,
- das erste Datenverarbeitungssystem (156) nach einem der vorigen Ansprüche 1-6, wobei zumindest einige der Datenobjekte der ersten Datenbank Aktionen des ersten Bauteils protokollieren einschließlich der in dem aktionsauslösenden Kommando spezifizierten Aktion, wobei der Zeitstempel der Feldwerte in der ersten Datenbank die Zeit der Durchführung einer Aktion durch das erste Bauteil angibt,
- ein zweites DBMS (618) mit einer zweiten Datenbank (620) mit einer Vielzahl von Datensätzen, wobei diese Datensätze jeweils mehrere Feldwerte beinhalten, wobei jeder der Feldwerte mit einem Zeitstempel verknüpft gespeichert ist, wobei zumindest einige der Datenobjekte der zweiten Datenbank Aktionen des zweiten Bauteils protokollieren einschließlich der in dem aktionsauslösenden Kommando spezifizierten Aktion, wobei der Zeitstempel der Feldwerte in der zweiten Datenbank von einer zweiten Echtzeituhr (520) geliefert wird und die Zeit der Durchführung einer Aktion durch das zweite Bauteil angibt, wobei das zweite DBMS eine Exportschnittstelle zum Export von Datensätzen der zweiten Datenbank einschließlich deren Zeitstempeln beinhaltet, um die exportierten Datensätze über die Importschnittstelle des ersten DBMS mit den Datensätzen der ersten Datenbank zusammenzuführen um ein gemeinsames Interaktionsprotokoll des ersten und zweiten elektronischen Bauteils bereitzustellen;
- ein Applikationsprogramm (622), das dazu konfiguriert ist, den Zeitstempel der Ausführung der in dem aktionsauslösenden Kommando spezifizierten Aktion durch das erste Bauteil mit dem Zeitstempel der Ausführung der in dem aktionsauslösenden Kommando spezifizierten Aktion durch das zweite Bauteil zu vergleichen und bei Überschreiten eines maximalen zeitlichen Abstands der verglichenen Zeitstempel eine Warnung auszugeben, dass das gemeinsame Interaktionsprotokoll nicht vertrauenswürdig ist.

14. Computerimplementiertes Verfahren zur Speicherung von Datensätzen, umfassend:
- Bereitstellung eines ersten Datenverarbeitungssystems (156) mit einem ersten DBMS (160) und einer ersten Echtzeituhr (168), wobei das erste DBMS eine erste Datenbank (102) mit einer Vielzahl von Datensätzen (DR1-DR7) umfasst, wobei die Datensätze jeweils mehrere Feldwerte beinhalten, wobei jeder der Feldwerte mit einem Zeitstempel (t1, t2, t3, t33) verknüpft gespeichert ist;
- Empfangen (304) eines ersten Schreibkommandos durch das erste DBMS, wobei das erste Schreibkommando sich auf das Ändern eines Feldwerts eines der Datensätze der ersten Datenbank bezieht;
- Als Antwort auf den Empfang des ersten Schreibkommandos:
o Empfangen (306) einer aktuellen Zeit von der ersten Echtzeituhr;
o Speichern (308) einer Kopie des Datensatzes, dessen Feldwert durch das Schreibkommando geändert werden soll, in die ersten Datenbank, wobei die Datensatzkopie einen gemäß dem ersten Schreibkommando geänderten Feldwert anstatt des bisherigen Feldwerts aufweist, wobei der geänderte Feldwert mit einem Zeitstempel, der eine neue aktuelle Zeit angibt, verknüpft gespeichert ist, wobei alle anderen Feldwerte der Datensatzkopie jeweils mit einem Zeitstempel verknüpft gespeichert sind, der die gleiche Zeit angibt wie der Zeitstempel des einen Feldwerts zur Empfangszeit des Schreibkommandos, oder wobei alle anderen Feldwerte der Datensatzkopie jeweils mit einem Zeitstempel, der die neue aktuelle Zeit angibt, verknüpft gespeichert sind, wobei das erste DBMS so konfiguriert ist, dass es die Durchführung von Schreibkommandos nicht protokolliert oder nur in einem so reduzierten Umfang protokolliert, dass eine Rekonstruktion des Inhalts der ersten Datenbank zu einem bestimmten Zeitpunkt anhand der Logdaten des ersten DBMS nicht möglich ist;
- Import (310) von weiteren Datensätzen über eine Importschnittstelle (174) durch das erste DBMS, wobei die weiteren Datensätze jeweils aus mehreren Feldwerten und mit den Feldwerten verknüpften Zeitstempeln bestehen, in die erste Datenbank;
- Empfang eines Rücksetzungskommandos bezüglich der ersten Datenbank durch das erste DBMS, wobei das Rücksetzungskommando einen Zeitpunkt in der Vergangenheit spezifiziert, auf welchen der Inhalt der ersten Datenbank zurückgesetzt werden soll;
- als Antwort auf den Empfang des Rücksetzungskommandos, Erstellen eines neuen Datenbankindex durch das erste DBMS, wobei die Erstellung umfasst:
o Identifikation aller Datensätze in der ersten Datenbank, deren Feldwert-assoziierte Zeitstempel alle älter sind als der im Rücksetzungskommando spezifizierte Zeitpunkt;
o Tokenisierung der Feldwerte selektiv nur der identifizierten Datensätze;
o Speichern von durch die Tokenisierung der identifizierten Datensätze erzeugten Token in einem durchsuchbaren Datenbankindex;
o Verwenden des durchsuchbaren Datenbankindex anstatt eines bisher verwendeten Datenbankindex der ersten Datenbank bei der Bearbeitung von Lesekommandos.

15. Das computerimplementierte Verfahren nach Anspruch 14, ferner umfassend:
- Identifikation derjenigen der weiteren Datensätze, welche konfliktfrei sind, durch die Importschnittstelle, wobei die konfliktfreien weiteren Datensätze beinhalten:
▪ Datensätze, die einen neuen Datensatz und nicht eine geänderte Kopie eines in der ersten Datenbank existierenden Datensatzes darstellen; oder
▪ Datensätze, die eine geänderte Kopie eines der Datensätze der ersten Datenbank darstellen, wobei die geänderte Kopie ausschließlich Feldwerte beinhaltet, deren Zeitstempel sämtlich gleichalt oder jünger sind als eine Referenzzeit;
- Speichern selektiv der identifizierten konfliktfreien weiteren Datensätze in die erste Datenbank,
- Zeitweises oder permanentes Unterbinden der Speicherung aller übrigen der weiteren Datensätze in die erste Datenbank.

16. Das computerimplementierte Verfahren nach Anspruch 14 oder 15, ferner umfassend:
- Bereitstellung eines zweiten Datenverarbeitungssystems (510) mit einem zweiten DBMS (526) und einer zweiten Echtzeituhr (520), wobei das zweite DBMS eine zweite Datenbank (528) mit einer Vielzahl von Datensätzen umfasst, wobei die Datensätze jeweils mehrere Feldwerte beinhalten, wobei jeder der Feldwerte mit einem Zeitstempel verknüpft gespeichert ist;
- Empfangen eines zweiten Schreibkommandos durch das zweite DBMS, wobei das zweite Schreibkommando sich auf das Ändern eines Feldwerts eines der Datensätze der zweiten Datenbank bezieht;
- Als Antwort auf den Empfang des zweiten Schreibkommandos:
• Empfangen einer aktuellen Zeit von der zweiten Echtzeituhr;
• Speichern einer Kopie des Datensatzes, dessen Feldwert durch das zweite Schreibkommando geändert werden soll, in die zweite Datenbank, wobei die Datensatzkopie einen gemäß dem zweiten Schreibkommando geänderten Feldwert anstatt des bisherigen Feldwerts aufweist, wobei der geänderte Feldwert mit einem Zeitstempel, der die von der zweiten Echtzeituhr empfangene aktuelle Zeit angibt, verknüpft gespeichert ist, wobei ein oder mehrere der anderen Feldwerte dieser Datensatzkopie jeweils mit einem Zeitstempel verknüpft gespeichert sind, der eine andere Zeit angibt, oder wobei alle anderen Feldwerte der Datensatzkopie jeweils mit einem Zeitstempel, der die von der zweiten Echtzeituhr bestimmte Zeit angibt, verknüpft gespeichert sind;
- Exportieren von Datensätzen der zweiten Datenbank einschließlich deren Zeitstempeln über eine Exportschnittstelle des zweiten DBMS;
- Übertragung der exportierten Datensätze als die weiteren Datensätze an die Importschnittstelle des ersten DBMS über ein Netzwerk.

17. Das computerimplementierte Verfahren nach Anspruch 14 oder 15, wobei das Verfahren umfasst:
- Bereitstellen eines ersten (602) und eines zweiten (604) elektronischen Bauteils,
o wobei zumindest einige der Datenobjekte der ersten Datenbank Aktionen des ersten Bauteils protokollieren, wobei der Zeitstempel der Feldwerte in der ersten Datenbank die Zeit der Durchführung einer Aktion durch das erste Bauteil angibt, die von der ersten Echtzeituhr bestimmt wurde,
o wobei zumindest einige der Datenobjekte der zweiten Datenbank Aktionen des zweiten Bauteils protokollieren, wobei der Zeitstempel der Feldwerte in der zweiten Datenbank die Zeit der Durchführung einer Aktion durch das zweite Bauteil angibt, die von der ersten oder einer weiteren Echtzeituhr bestimmt wurde,
- gleichzeitigen Ausgabe eines aktionsauslösenden Kommandos an das erste und zweite elektronische Bauteil durch eine Kontrolleinheit (612),
o als Antwort auf den Empfang des aktionsauslösenden Kommandos, Speichern eines Datenobjekts, das die in dem aktionsauslösenden Kommando spezifizierten Aktion angibt, in der ersten Datenbank durch das erste elektronische Bauteil, wobei der Zeitstempel der Feldwerte dieses Datenobjekts die Zeit der Durchführung dieser Aktion durch das zweite Bauteil angibt,
o als Antwort auf den Empfang des aktionsauslösenden Kommandos, Speichern eines Datenobjekts, das die in dem aktionsauslösenden Kommando spezifizierten Aktion angibt, in der zweiten Datenbank durch das zweite elektronische Bauteil, wobei der Zeitstempel der Feldwerte dieses Datenobjekts die Zeit der Durchführung dieser Aktion durch das zweite Bauteil angibt,
- Importieren von Datensätzen der zweiten Datenbank einschließlich deren Zeitstempeln über die Importschnittstelle des ersten DBMS, um diese mit den Datensätzen der ersten Datenbank zusammenzuführen um ein gemeinsames Interaktionsprotokoll des ersten und zweiten elektronischen Bauteils bereitzustellen;
- Vergleichen des Zeitstempels der Ausführung der in dem aktionsauslösenden Kommando spezifizierten Aktion durch das erste Bauteil mit dem Zeitstempel der Ausführung der in dem aktionsauslösenden Kommando spezifizierten Aktion durch das zweite Bauteil durch ein Applikationsprogramm (622) und Ausgabe einer Warnung, falls ein maximaler zeitlicher Abstand zwischen den verglichenen Zeitstempeln überschritten ist, wobei die Warnung angibt, dass das gemeinsame Interaktionsprotokoll nicht vertrauenswürdig ist.

## Claims

1. A first data processing system (156) comprising a first DBMS (160) and a first real-time clock (168), wherein the first DBMS comprises:
- a first database (102) having a plurality of data records (DR1-DR7), wherein the data records each include a plurality of field values, wherein each of the field values is stored linked to a timestamp (t1, t2, t3, t33);
wherein the first DBMS is configured to:
- receive (304) a first write command to modify a field value of one of the data records in the first database;
- in response to receiving the first write command:
o receive (306) a current time from the first real-time clock;
o store (308) in the first database a copy of the data record for which the field value is to be modified by the write command, wherein the data record copy has a field value modified in accordance with the first write command instead of the previous field value, wherein the modified field value is stored linked to a timestamp indicating the current time received from the first real-time clock, wherein one or more of the other field values of the data record copy are each stored linked to a timestamp indicating a different time, or wherein all of the other field values of the data record copy are each stored linked to a timestamp indicating the time determined by the first real-time clock;
- wherein the first DBMS includes an import interface (174) configured to import (310) into the first database further data records, each consisting of a plurality of field values and timestamps linked to the field values; and
- wherein the first DBMS is configured such that it does not log the execution of write commands or logs them only to such a reduced extent that a reconstruction of the content of the first database at a certain point in time is not possible using the log data of the first DBMS; and
- wherein the first DBMS is configured to:
- receive a reset command relating to the first database, wherein the reset command specifies a point in time in the past to which the content of the first database is to be reset;
- in response to receiving the reset command, create a new database index, wherein the creation comprises:
o identifying all data records in the first database for which the field-value-associated timestamps are all older than the time specified in the reset command;
∘ tokenising the field values selectively of only the identified data records;
∘ storing tokens generated by tokenising the identified data records in a searchable database index;
o using the searchable database index instead of a previously used database index of the first database when processing read commands.

2. The first data processing system according to claim 1, wherein the import interface is configured to:
∘ identify those of the further data records that are conflict-free, wherein the conflict-free further data records include:
▪ data records that represent a new data record and not a modified copy of a data record existing in the first database; or
▪ data records that are a modified copy of one of the data records in the first database, wherein the modified copy contains only field values for which the timestamps are all the same age or younger than a reference time;
∘ selectively save the identified conflict-free further data sets in the first database,
o temporarily or permanently prevent all remaining further data records from being stored in the first database.

3. The first data processing system according to any one of the preceding claims, wherein the temporary or permanent prevention of the storage comprises:
- providing the remaining further data records to an application program having access to the first database and configured to resolve conflicts between the remaining further data records and the data records already stored in the first database by modifying or filtering the remaining further data records; and storing the modified and/or filtered remaining data records in the first database; or
- deleting the remaining further data records without saving them in the first database.

4. The first data processing system according to any one of the preceding claims, wherein the first DBMS is configured such that it
- while storing the data record copy in the first database, allows a parallel creation and storage of further copies of the copied data record; and/or
- omits a check of the logical consistency of the modified field value with the content of the data records already existing in the first database for storing the data record copy in the first database.

5. The first data processing system according to any one of the preceding claims, wherein the first DBMS performs the writing of the database copy into the first database without embedding the write access in a database transaction, which guarantees preservation of data consistency of the written data record copy with the existing data records.

6. The first data processing system according to any one of the preceding claims, wherein the first DBMS is configured to periodically and automatically create a database index, wherein the creation in each case comprises:
- tokenising the field values of the data records stored in the first database;
- storing tokens generated by tokenisation in a searchable database index;
- saving a time determined by the first real-time clock at the time of index creation in conjunction with the created database index;
wherein the first DBMS is configured to:
- receive a first read command to read data records stored in the first database;
- in response to receiving the read command, search the database index for data records containing a search value specified in the read command.

7. A distributed computer system (500) which comprises the first data processing system according to any one of the preceding claims in the form of a first computer system and a second data processing system (510) in the form of a second computer system, wherein the second data processing system comprises a second DBMS (526) and a second real-time clock (520), wherein the second DBMS comprises:
- a second database (528) having a plurality of data records (DR135, DR2', DR3'), wherein said data records each include a plurality of field values, wherein each of the field values is stored linked to a timestamp;
wherein the second DBMS is configured to:
- receive a second write command to modify a field value of one of the data records of the second database;
- in response to receiving the second write command:
∘ receive a current time from the second real-time clock;
∘ store in the second database a copy of the data record for which the field value is to be modified by the write command, wherein the data record copy in the second database has a field value modified in accordance with the second write command instead of the previous field value, wherein the modified field value is stored linked to a timestamp indicating the specific current time, wherein all other field values of the data record copy are linked to the same timestamp as the original field value, or wherein all other field values of the data record copy are stored linked to the timestamp indicating the specific current time;
wherein the second DBMS includes an export interface (524) for exporting data records of the second database including their timestamps to make the exported data records available as the further data records of the import interface of the first DBMS.

8. The distributed computer system according to claim 8, wherein the first and second DBMS are configured such that new data records or modified copies of existing data records in the first database and in the second database, are created independently of one another.

9. The distributed computer system according to claim 8 or 9, wherein the first data processing system is a database server, and wherein the second data processing system is a mobile computer system, wherein the content of the second database is a complete or partial copy of the data records of the first database.

10. The distributed computer system according to any one of claims 8-10, wherein the second DBMS is connected to the first data processing system via a network connection via which a replication of data records from the first to the second database and/or from the second to the first database occurs, wherein the network connection is repeatedly interrupted and the first and second DBMS are configured such that, even during the interruption, new data records or modified copies of existing data records may be created independently of one another in the first database and in the second database.

11. The distributed computer system according to any one of claims 8-11, wherein the second DBMS is configured such that it automatically determines whether a network connection to the first DBMS exists, and, if the network connection exists, exports data records of the second database, including timestamps thereof, via the export interface, transmits the data records via the network to the first DBMS, and the first DBMS imports the exported data records via its import interface.

12. The distributed computer system according to any one of claims 8-12, wherein the system includes one or more further second data processing systems each having the properties specified for the second data processing system in claims 8-12.

13. An electronic system (600) for verifying the trustworthiness of a log of the interaction of a first and a second electronic component, wherein the electronic system comprises:
- the first electronic component (602),
- the second electronic component (604),
- a control unit (612) for simultaneously outputting an action-initiating command to the first and second electronic component,
- the first data processing system (156) according to any one of preceding claims 1-6, wherein at least some of the data objects of the first database log actions of the first component including the action specified in the action-initiating command, wherein the timestamp of the field values in the first database indicates the time of execution of an action by the first component,
- a second DBMS (618) comprising a second database (620) having a plurality of data records, wherein said data records each include a plurality of field values, wherein each of the field values is stored with a timestamp linked thereto, wherein at least some of the data objects of the second database log actions of the second component including the action specified in the action-initiating command, wherein the timestamp of the field values in the second database is provided by a second real-time clock (520) and indicates the time of execution of an action by the second component, wherein the second DBMS includes an export interface for exporting data records of the second database including their timestamps to merge the exported data records with the data records of the first database via the import interface of the first DBMS to provide a common interaction log of the first and second electronic components;
- an application program (622) configured to compare the timestamp of execution by the first component of the action specified in the action-initiating command with the timestamp of execution by the second component of the action specified in the action-initiating command, and to output a warning that the common interaction log is not trustworthy if a maximum time difference between the compared timestamps is exceeded.

14. A computer-implemented method for storing data records, comprising:
- providing a first data processing system (156) comprising a first DBMS (160) and a first real-time clock (168), wherein the first DBMS comprises a first database (102) having a plurality of data records (DR1-DR7), wherein the data records each include a plurality of field values, wherein each of the field values is stored linked to a timestamp (t1, t2, t3, t33) ;
- receiving (304) a first write command by the first DBMS, wherein the first write command relates to the modifying of a field value of one of the data records in the first database;
- in response to receiving the first write command:
∘ receiving (306) a current time from the first real-time clock;
∘ storing (308) in the first database a copy of the data record for which the field value is to be modified by the write command, wherein the data record copy has a field value modified in accordance with the first write command instead of the previous field value, wherein the modified field value is stored linked to a timestamp indicating a new current time, wherein all other field values of the data record copy are stored each linked to a timestamp indicating the same time as the timestamp of the one field value at the time of receipt of the write command, or wherein all other field values of the data record copy are stored each linked to a timestamp indicating the new current time, wherein the first DBMS is configured such that it does not log the execution of write commands or logs them only to such a reduced extent that a reconstruction of the content of the first database at a certain point in time is not possible using the log data of the first DBMS;
- importing (310) into the first database further data records via an import interface (174) by the first DBMS, wherein the further data records each consist of a plurality of field values and timestamps linked to the field values;
- receiving a reset command relating to the first database by the first DBMS, wherein the reset command specifies a point in time in the past to which the content of the first database is to be reset;
- in response to receiving the reset command, creating a new database index by the first DBMS, wherein the creation comprises:
∘ identifying all data records in the first database for which the field-value-associated timestamps are all older than the time specified in the reset command;
∘ tokenising the field values selectively of only the identified data records;
o storing tokens generated by tokenising the identified data records in a searchable database index;
∘ using the searchable database index instead of a previously used database index of the first database when processing read commands.

15. The computer-implemented method according to claim 14, further comprising:
- identifying by the import interface those of the further data records that are conflict-free, wherein the conflict-free further data records include:
▪ records that represent a new data record and not a modified copy of a data record existing in the first database; or
▪ data records that contain a modified copy of one of the data records in the first database, wherein the modified copy contains only field values for which the timestamps are all the same age or younger than a reference time;
- selectively saving the identified conflict-free further data records in the first database,
- temporarily or permanently preventing all remaining further data records from being stored in the first database.

16. The computer-implemented method according to claim 14 or 15, further comprising:
- providing a second data processing system (510) comprising a second DBMS (526) and a second real-time clock (520), wherein the second DBMS comprises a second database (528) having a plurality of data records, wherein the data records each include a plurality of field values, wherein each of the field values is stored linked to a timestamp;
- receiving a second write command by the second DBMS, wherein the second write command relates to the modifying of a field value of one of the data records of the second database;
- in response to receiving the second write command:
• receiving a current time from the second real-time clock;
• storing in the second database a copy of the data record for which the field value is to be modified by the second write command, wherein the data record copy has a field value modified in accordance with the second write command instead of the previous field value, wherein the modified field value is stored linked to a timestamp indicating the current time received from the second real-time clock, wherein one or more of the other field values of that data record copy are each stored linked to a timestamp indicating a different time, or wherein all of the other field values of the data record copy are each stored linked to a timestamp indicating the time determined by the second real-time clock;
- exporting data records of the second database including their timestamps via an export interface of the second DBMS;
- transferring the exported data records as the further data records to the import interface of the first DBMS via a network.

17. The computer-implemented method according claim 14 or 15, wherein the method comprises:
- providing a first (602) and a second (604) electronic component,
∘ wherein at least some of the data objects of the first database log actions of the first component, wherein the timestamp of the field values in the first database indicate the time of execution of an action by the first component determined by the first real-time clock,
∘ wherein at least some of the data objects of the second database log actions of the second component, wherein the timestamp of the field values in the second database indicate the time of execution of an action by the second component determined by the first or a further real-time clock,
- simultaneously outputting an action-initiating command to the first and second electronic component by a control unit (612),
o in response to receiving the action-initiating command, storing in the first database by the first electronic component a data object indicating the action specified in the action-initiating command, wherein the timestamp of the field values of this data object indicate the time of execution of this action by the second component,
∘ in response to receiving the action-initiating command, storing in the second database by the second electronic component a data object indicating the action specified in the action-initiating command, wherein the timestamp of the field values of this data object indicate the time of execution of this action by the second component,
- importing data records of the second database, including their timestamps, via the import interface of the first DBMS to merge them with the data records of the first database to provide a common interaction log of the first and second electronic component;
- comparing by an application program (622) the timestamp of execution by the first component of the action specified in the action-initiating command with the timestamp of execution by the second component of the action specified in the action-initiating command, and outputting a warning if a maximum time interval between the compared timestamps is exceeded, wherein the warning indicates that the common interaction log is not trustworthy.

## Revendications

1. Premier système de traitement de données (156) avec un premier système de gestion de bases de données DBMS (160) et une première horloge temps réel (168), le premier DBMS comprenant :
- une première banque de données (102) avec une multiplicité d'ensembles de données (DR1 à DR7), où les ensembles de données contiennent respectivement plusieurs valeurs de champ, où chacune des valeurs de champ est enregistrée combinée avec une estampille temporelle (t1, t2, t3, t33) ;
dans lequel le premier DBMS est conçu pour :
- la réception (304) d'une première commande d'écriture pour la modification d'une valeur de champ d'un des ensembles de données de la première banque de données ;
- en réponse à la réception de la première commande d'écriture :
∘ la réception (306) d'une heure actuelle de la première horloge temps réel ;
∘ l'enregistrement (308) d'une copie de l'ensemble de données dont la valeur de champ doit être modifiée par la commande d'écriture, dans la première banque de données, où la copie de l'ensemble de donnée présente une valeur de champ modifiée selon la première commande d'écriture à la place de la valeur de champ précédente, où la valeur de champ modifiée est enregistrée combinée avec une estampille temporelle qui indique l'heure actuelle reçue à partir de la première horloge temps réel, où une ou plusieurs des autres valeurs de champ de la copie de l'ensemble de données sont respectivement enregistrées combinées avec une estampille temporelle qui indique une autre heure, ou dans lequel toutes les valeurs de champ de la copie de l'ensemble de données sont enregistrées combinées respectivement avec une estampille temporelle qui indique l'heure déterminée par la première horloge temps réel ;
- dans lequel le premier DBMS contient une interface d'importation (174) qui est conçue pour l'importation (310) de nouveaux ensembles de données qui sont constitués respectivement de plusieurs valeurs de champ et d'estampilles temporelles combinées avec les valeurs de champ, dans la première banque de données ; et
- dans lequel le premier DBMS est conçu de telle manière qu'il ne prenne pas acte de l'exécution de commandes d'écriture ou ne prenne acte que dans une mesure réduite de sorte qu'une reconstruction du contenu de la première banque de données n'est pas possible à un instant déterminé à l'aide des données de connexion du premier DBMS ; et
- dans lequel le premier DBMS est conçu pour :
- la réception d'une commande de réinitialisation concernant la première banque de données, où la commande de réinitialisation spécifie un instant dans le passé vers lequel le contenu de la première banque de données doit être réinitialisé ;
- en réponse à la réception de la commande de réinitialisation, l'établissement d'un nouvel index de banque de données, l'établissement comprenant :
∘ l'identification de tous les ensembles de données dans la première banque de données dont les estampilles temporelles associées à la valeur de champ sont toutes antérieures à l'instant spécifié dans la commande de réinitialisation ;
∘ la tokénisation des valeurs de champ sélectivement et uniquement des ensembles de données identifiés ;
∘ l'enregistrement de jetons créés par la tokénisation des ensembles de données identifiés dans un index de banque de données interrogeable ;
∘ l'emploi de l'index de banque de données interrogeable à la place d'un index de banque de données de la première banque de données employé jusqu'à présent lors du traitement de commandes de lecture.

2. Premier système de traitement de données selon la revendication 1, dans lequel l'interface d'importation est conçue pour :
∘ l'identification des autres ensembles de données en question, lesquels sont exempts de conflits, où les autres ensembles de données exempts de conflits contiennent :
▪ des ensembles de données qui représentent un nouvel ensemble de données et non une copie modifiée d'un ensemble de données existant dans la première banque de données ; ou
▪ des ensembles de données qui représentent une copie modifiée d'un des ensembles de données de la première banque de données, où la copie modifiée contient exclusivement des valeurs de champ dont les estampilles temporelles sont toutes du même âge ou sont plus jeunes qu'un instant de référence ;
∘ l'enregistrement de manière sélective des autres ensembles de données exempts de conflits identifiés dans la première banque de données,
∘ l'interdiction temporaire ou permanente de l'enregistrement de tous les autres ensembles de données restants dans la première banque de données.

3. Premier système de traitement de données selon l'une des revendications précédentes, dans lequel l'interdiction temporaire ou permanente de l'enregistrement comprend :
- la mise à disposition des autres ensembles de données restants sur un programme d'application, lequel a accès à la première banque de données et est conçu pour résoudre des conflits entre les autres ensembles de données restants et les ensembles de données enregistrés déjà dans la première banque de données par une modification ou un filtrage des autres ensembles de données restants ; et l'enregistrement des ensembles de données restants modifiés et/ou filtrés dans la première banque de données ; ou
- l'effacement des autres ensembles de données restants sans enregistrer ceux-ci dans la première banque de données.

4. Premier système de traitement de données selon l'une des revendications précédentes, dans lequel le premier DBMS est conçu de telle manière qu'il
- permette un établissement et un enregistrement en parallèle d'autres copies de l'ensemble de données copié pendant l'enregistrement de la copie de l'ensemble de données dans la première banque de données ; et/ou
- s'abstienne d'une vérification de la cohérence logique de la valeur de champ modifiée avec le contenu des ensembles de données déjà existants dans la première banque de données pour l'enregistrement de la copie de l'ensemble de données dans la première banque de données.

5. Premier système de traitement de données selon l'une des revendications précédentes, dans lequel le premier DBSM exécute l'écriture de la copie de la banque de données dans la première banque de données sans incorporer l'accès en écriture dans une transaction de banque de données qui garantit la réalité de la cohérence des données de la copie de l'ensemble de données écrite avec les ensembles de données existants.

6. Premier système de traitement de données selon l'une des revendications précédentes, dans lequel le premier DBSM est conçu pour établir régulièrement et automatiquement un index de banque de données, l'établissement comprenant respectivement :
- la tokénisation des valeurs de champ des ensembles de données enregistrés dans la première banque de données ;
- l'enregistrement de jetons créés par la tokénisation dans un index de banque de données interrogeable ;
- l'enregistrement d'un instant déterminé par la première horloge temps réel à l'instant de l'établissement de l'index en relation avec l'index de banque de données établi ;
dans lequel le premier DBSM est conçu pour :
- la réception d'une première commande de lecture pour la lecture d'ensembles de données enregistrés dans la première banque de données ;
- en réponse à la réception de la commande de lecture, la recherche dans l'index de banques de données d'ensembles de données qui contiennent une valeur de recherche spécifiée dans la commande de lecture.

7. Système informatique partagé (500), lequel comprend le premier système de traitement de données selon l'une des revendications précédentes sous la forme d'un premier système informatique et un deuxième système de traitement de données (510) sous la forme d'un deuxième système informatique, où le deuxième système de traitement de données contient un deuxième DBMS (526) et une deuxième horloge temps réel (520), où le deuxième DBMS comprend :
- une deuxième banque de données (528) avec une multiplicité d'ensembles de données (DR135, DR2', DR3'), où ces ensembles de données contiennent respectivement plusieurs valeurs de champ, où chacune des valeurs de champ est enregistrée combinée avec une estampille temporelle ;
dans lequel le deuxième DBMS est conçu pour :
- la réception d'une deuxième commande d'écriture pour la modification d'une valeur de champ d'un des ensembles de données de la deuxième banque de données ;
- en réponse à la réception de la deuxième commande d'écriture :
∘ la réception d'une heure actuelle de la deuxième horloge temps réel ;
∘ l'enregistrement d'une copie de l'ensemble de données dont la valeur de champ doit être modifiée par la commande d'écriture, dans la deuxième banque de données, où la copie de l'ensemble de donnée présente une valeur de champ modifiée selon la deuxième commande d'écriture à la place de la valeur de champ précédente dans la deuxième banque de données, où la valeur de champ modifiée est enregistrée combinée avec une estampille temporelle qui indique l'heure actuelle déterminée, où toutes les autres valeurs de champ de la copie de l'ensemble de données sont combinées avec la même estampille temporelle que la valeur de champ d'origine respectivement, ou dans lequel toutes les autres valeurs de champ de la copie de l'ensemble de données sont enregistrées combinées respectivement avec l'estampille temporelle qui indique l'heure actuelle déterminée ;
dans lequel le deuxième DBMS contient une interface d'exportation (524) qui est conçue pour l'exportation d'ensembles de données de la deuxième banque de données, contenant comprises leurs estampilles temporelles afin de mettre à disposition les ensembles de données exportés sous la forme des autres ensembles de données de l'interface d'importation du premier DBMS.

8. Système informatique partagé selon la revendication 8, dans lequel le premier et le deuxième DBMS sont conçus de telle manière que des nouveaux ensembles de données ou des copies modifiées d'ensembles de données présents sont établis de manière indépendante les uns des autres respectivement dans la première banque de données et dans la deuxième banque de données.

9. Système informatique partagé selon la revendication 8 ou la revendication 9, dans lequel le premier système de traitement de données est un serveur de banque de données et dans lequel le deuxième système de traitement de données est un système informatique mobile, où le contenu de la deuxième banque de données est une copie complète ou partielle des ensembles de données de la première banque de données.

10. Système informatique partagé selon l'une des revendications 8 à 10, dans lequel le deuxième DBMS est relié avec le premier système de traitement de données par le biais d'une liaison par réseau, par laquelle une réplication d'ensembles de données a lieu de la première banque de données vers la deuxième, et/ou de la deuxième banque de données vers la première, dans lequel la liaison par réseau est interrompue de manière répétée et le premier et le deuxième DBMS sont conçus de telle manière que des nouveaux ensembles de données ou des copies modifiées d'ensembles de données présentes peuvent être établis de manière indépendante les uns des autres respectivement dans la première banque de données et dans la deuxième banque de données également pendant l'interruption.

11. Système informatique partagé selon l'une des revendications 8 à 11, dans lequel le deuxième DBMS est conçu de telle manière qu'il constate automatiquement s'il y a une liaison par réseau vers le premier DBMS et, s'il y a une liaison par réseau, exporte des ensembles de données de la deuxième banque de données y compris leurs estampilles temporelles par le biais de l'interface d'exportation, les transmet par le biais du réseau vers le premier DBMS et le premier DBMS importe les ensembles de données exportés par le biais de son interface d'importation.

12. Système informatique partagé selon l'une des revendications 8 à 12, le système contenant un ou plusieurs autres deuxièmes systèmes de traitement de données qui présentent respectivement les propriétés spécifiées pour le deuxième système de traitement de données dans les revendications 8 à 12.

13. Système électronique (600) pour la vérification de la fiabilité d'un protocole de l'interaction entre un premier composant électronique et un deuxième, le système électronique comprenant :
- le premier composant électronique (602),
- le deuxième composant électronique (604),
- une unité de commande (612) pour l'émission simultanément d'une commande donnant lieu à une action au premier composant électronique et au deuxième,
- le premier système de traitement de données (156) selon l'une des revendications précédentes 1 à 6, dans lequel au moins quelques uns des objets de données de la première banque de données prennent acte d'actions du premier composant en plus de l'action spécifiée dans la commande donnant lieu à l'action, où l'estampille temporelle des valeurs de champ dans la première banque de données indique l'heure de l'exécution d'une action par le premier composant,
- un deuxième DBMS (618) avec une deuxième banque de données (620) avec une multiplicité d'ensembles de données, où ces ensembles de données contiennent respectivement plusieurs valeurs de champs, où chacune des valeurs de champ est enregistrée combinée avec une estampille temporelle, où au moins quelques uns des objets de donnée de la deuxième banque de données prennent acte d'actions du deuxième composant y compris des actions spécifiées dans la commande donnant lieu à l'action, où l'estampille temporelle des valeurs de champs dans la deuxième banque de données est délivrée par une deuxième horloge temps réel (520) et indique l'heure de l'exécution d'une action par le deuxième composant, où le deuxième DBMS contient une interface d'exportation pour l'exportation d'ensembles de données de la deuxième banque de données y compris leurs estampilles temporelles, afin de réunir les ensembles de données exportés avec les ensembles de données de la première banque de données par le biais de l'interface d'importation du premier DBMS afin d'établir un protocole d'interaction commun du premier composant électronique et du deuxième ;
- un programme d'application (622) qui est conçu pour comparer l'estampille temporelle de l'exécution de l'action spécifiée dans la commande donnant lieu à l'action par le premier composant avec l'estampille temporelle de l'exécution de l'action spécifiée dans la commande donnant lieu à l'action par le deuxième composant et pour un dépassement d'un écart temporel maximal des estampilles temporelles comparées, émettre un avertissement que le protocole d'interaction commun n'est pas fiable.

14. Procédé mis en oeuvre par ordinateur pour l'enregistrement d'ensembles de données comprenant :
- la mise en place d'un premier système de traitement de données (156) avec un premier DBMS (160) et une première horloge temps réel (168), le premier DBMS comprenant une première banque de données (102) avec une multiplicité d'ensembles de données (DR1 à DR7), où les ensembles de données contiennent respectivement plusieurs valeurs de champ, où chacune des valeurs de champ est enregistrée combinée avec une estampille temporelle (t1, t2, t3, t33) ;
- la réception (304) d'une première commande d'écriture par le premier DBMS, où la première commande d'écriture concerne la modification d'une valeur de champ d'un des ensembles de données de la première banque de données ;
- en réponse à la réception de la première commande d'écriture :
∘ la réception (306) d'une heure actuelle de la première horloge temps réel ;
∘ l'enregistrement (308) d'une copie de l'ensemble de données dont la valeur de champ doit être modifiée par la commande d'écriture, dans la première banque de données, où la copie de l'ensemble de donnée présente une valeur de champ modifiée selon la première commande d'écriture à la place de la valeur de champ précédente, où la valeur de champ modifiée est enregistrée combinée avec une estampille temporelle qui indique une nouvelle heure actuelle, où toutes les autres valeurs de champ de la copie de l'ensemble de données sont enregistrées combinées respectivement avec une estampille temporelle qui indique la même heure que l'estampille temporelle d'une valeur de champ au moment de la réception de la commande d'écriture, ou dans lequel toutes les autres valeurs temporelles de la copie de l'ensemble de données sont enregistrées combinées respectivement avec une estampille temporelle qui indique la nouvelle heure actuelle, dans lequel le premier DBMS est conçu de telle manière qu'il ne prend pas acte de l'exécution de commandes d'écriture ou ne les prend en compte que dans une mesure restreinte, de sorte qu'une reconstruction du contenu de la première banque de données n'est pas possible à un moment déterminé à l'aide des données de connexion du premier DBMS ;
- l'importation (310) de nouveaux ensembles de données par le biais d'une interface d'importation (174) par le premier DBMS, où les nouveaux ensembles de données sont constitués respectivement de plusieurs valeurs de champ et d'estampilles temporelles combinées avec les valeurs de champ, dans la première banque de données ;
- la réception d'une commande de réinitialisation concernant la première banque de données par le premier DBMS, où la commande de réinitialisation spécifie un instant dans le passé auquel le contenu de la première banque de données doit être réinitialisé ;
- en réponse à la réception de la commande de réinitialisation, l'établissement d'un nouvel index de banque de données par le premier DBMS, l'établissement comprenant :
∘ l'identification de tous les ensembles de données dans la première banque de données dont les estampilles temporelles associées à la valeur de champ sont toutes antérieures à l'instant spécifié dans la commande de réinitialisation ;
∘ la tokénisation des valeurs de champ sélectivement et uniquement des ensembles de données identifiés ;
∘ l'enregistrement de jetons créés par la tokénisation des ensembles de données identifiés dans un index de banque de données interrogeable ;
∘ l'emploi de l'index de banque de données interrogeable à la place d'un index de banque de données de la première banque de données employé jusqu'à présent lors du traitement de commandes de lecture.

15. Procédé mis en oeuvre par ordinateur selon la revendication 14, comprenant en outre :
- l'identification des autres ensembles de données en question, lesquels sont exempts de conflits, par l'interface d'importation, où les autres ensembles de données exempts de conflits contiennent :
▪ des ensembles de données qui représentent un nouvel ensemble de données et non une copie modifiée d'un ensemble de données existant dans la première banque de données ; ou
▪ des ensembles de données qui représentent une copie modifiée d'un des ensembles de données de la première banque de données, où la copie modifiée contient exclusivement des valeurs de champ dont les estampilles temporelles sont toutes du même âge ou sont plus jeunes qu'un instant de référence ;
- l'enregistrement de manière sélective des autres ensembles de données exempts de conflits identifiés dans la première banque de données,
- l'interdiction temporaire ou permanente de l'enregistrement de tous les autres ensembles de données restants dans la première banque de données.

16. Procédé mis en oeuvre par ordinateur selon la revendication 14 ou la revendication 15, comprenant en outre :
- la mise en place d'un deuxième système de traitement de données (510) avec un deuxième DBMS (526) et une deuxième horloge temps réel (520), où le deuxième DBMS comprend une deuxième banque de données (528) avec une multiplicité d'ensembles de données, où les ensembles de données contiennent respectivement plusieurs valeurs de champ, où chacune des valeurs de champ est enregistrée combinée avec une estampille temporelle ;
- la réception d'une deuxième commande d'écriture par le deuxième DBMS, où la deuxième commande d'écriture concerne la modification de la valeur de champ d'un des ensembles de données de la deuxième banque de données ;
- en réponse à la réception de la deuxième commande d'écriture :
• la réception d'une heure actuelle à partir de la deuxième horloge temps réel ;
• l'enregistrement d'une copie de l'ensemble de données dont la valeur de champ doit être modifiée par la deuxième commande d'écriture, dans la deuxième banque de données, où la copie de l'ensemble de donnée présente une valeur de champ modifiée selon la deuxième commande d'écriture à la place de la valeur de champ précédente, où la valeur de champ modifiée est enregistrée combinée avec une estampille temporelle qui indique l'heure actuelle reçue à partir de la deuxième horloge temps réel, où une ou plusieurs des autres valeurs de champ de cette copie de l'ensemble de données sont enregistrées combinées avec une estampille temporelle qui indique une autre heure, ou dans lequel toutes les autres valeurs de champ de la copie de l'ensemble de données sont enregistrées combinées respectivement avec une estampille temporelle qui indique l'heure actuelle déterminée par la deuxième horloge temps réel ;
- l'exportation d'ensembles de données de la deuxième banque de données y compris leurs estampilles temporelles par le biais d'une interface d'exportation du deuxième DBMS ;
- la transmission des ensembles de données exportés sous forme d'autres ensembles de données de l'interface d'importation du premier DBMS par le biais d'un réseau.

17. Procédé mis en oeuvre par ordinateur selon la revendication 14 ou la revendication 15, le procédé comprenant :
- la mise en place d'un premier (602) et d'un deuxième (604) composant électronique,
∘ dans lequel au moins quelques uns des objets de données de la première banque de données prennent acte d'actions du premier composant, où l'estampille temporelle des valeurs de champ indique dans la première banque de données l'heure de l'exécution d'une action par le premier composant qui a été déterminée par la première horloge temps réel,
∘ dans lequel au moins quelques uns des objets de données de la deuxième banque de données prennent acte d'actions du deuxième composant, où l'estampille temporelle des valeurs de champ dans la deuxième banque de données indique l'heure de l'exécution d'une action par le deuxième composant qui a été déterminée par la première horloge temps réel ou une autre horloge temps réel,
- l'émission simultanée d'une commande donnant lieu à une action au premier et au deuxième composant par une unité de commande (612),
∘ en réponse à la réception d'une commande donnant lieu à une action, l'enregistrement d'un objet de donnée qui indique l'action spécifiée dans la commande donnant lieu à l'action, dans la première banque de données par le premier composant électronique, où l'estampille temporelle des valeurs de champ de cet objet de données indique l'heure de l'exécution de cette action par le deuxième composant,
∘ en réponse à la réception d'une commande donnant lieu à une action, l'enregistrement d'un objet de donnée qui indique l'action spécifiée dans la commande donnant lieu à l'action, dans la deuxième banque de données par le deuxième composant électronique, où l'estampille temporelle des valeurs de champ de cet objet de données indique l'heure de l'exécution de cette action par le deuxième composant,
- l'importation d'ensembles de données de la deuxième banque de données, y compris leurs estampilles temporelles, par le biais de l'interface d'importation du premier DBMS afin de réunir ceux-ci avec les ensembles de données de la première banque de données afin d'établir un protocole d'interaction commun du premier et du deuxième composant électronique ;
- la comparaison de l'estampille temporelle de l'exécution de l'action spécifiée dans la commande donnant lieu à l'action par le premier composant avec l'estampille temporelle de l'exécution de l'action spécifiée dans la commande donnant lieu à l'action par le deuxième composant par un programme d'application (622) et l'émission d'un avertissement dans le cas où un écart temporel maximal entre les estampilles temporelles comparées est dépassé, où l'avertissement indique que le protocole d'interaction commun n'est pas fiable.
